# EUROPÄISCHE PATENTSCHRIFT

(11) **EP 3 439 159 B1**
(45) Veröffentlichungstag und Bekanntmachung des Hinweises auf die Patenterteilung: **02.09.2020**
(21) Anmeldenummer: 18184369.9
(22) Anmeldetag: 19.07.2018
(51) Int. Cl.: H02M 3/156

(54) **REDUZIERUNG VON LICHTLEISTUNGSSCHWANKUNGEN BEI EINER SCHWELLENWERT-STEUERUNG EINES AKTIV GETAKTETEN KONVERTERS**
REDUCTION OF LIGHT POWER FLUCTUATIONS IN A THRESHOLD CONTROL SYSTEM OF AN ACTIVELY CLOCKED CONVERTER
RÉDUCTION DE FLUCTUATIONS DE FLUX LUMINEUX DANS UNE COMMANDE DE VALEUR SEUIL D'UN CONVERTISSEUR CADENCÉ ACTIVEMENT

(30) Priorität: 03.08.2017 DE 102017213491
(43) Veröffentlichungstag der Anmeldung: 06.02.2019
(73) Patentinhaber: Tridonic GmbH & Co. KG, 6851 Dornbirn (AT)
(72) Erfinder: Saccavini, Lukas, 6850 Dornbirn (AT)
(74) Vertreter: Rupp, Christian

(56) Entgegenhaltungen:
- WO-A1-2016/134945
- DE-A1-102015 102 715
- DE-A1-102015 206 243
- Muhammad M Rashid: "Power Electronics Handbook", , 31. Dezember 2001 (2001-12-31), Seiten 220-220, XP055523208, Gefunden im Internet: URL:https://www.elsevier.com/books/power-e lectronics-handbook/rashid/978-0-12-811407 -0 [gefunden am 2018-11-13]

## Beschreibung

### 1. Gebiet der Erfindung

Die vorliegende Erfindung betrifft eine Steuereinheit zur Steuerung wenigstens eines aktiv getakteten Konverters zur elektrischen Versorgung wenigstens eines Leuchtmittels, insbesondere einer Leuchtdiode. Ferner betrifft die vorliegende Erfindung ein Betriebsgerät aufweisend eine solche erfindungsgemäße Steuereinheit und wenigstens einen aktiv getakteten Konverter; eine Leuchte aufweisend wenigstens ein solches erfindungsgemäßes Betriebsgerät und wenigstens ein Leuchtmittel, insbesondere wenigstens eine Leuchtdiode; sowie ein Verfahren zur Steuerung wenigstens eines aktiv getakteten Konverters zur elektrischen Versorgung wenigstens eines Leuchtmittels, insbesondere einer Leuchtdiode.

### 2. Hintergrund

Aus dem Stand der Technik sind aktiv getaktete Konverter, wie beispielsweise Buck-Konverter (auch bekannt als Abwärtswandler oder Tiefsetzsteller) oder Flyback-Konverter (auch bekannt als Sperrwandler oder Hoch-Tiefsetzsteller), zum Bereitstellen von Spannung, Strom und/oder elektrische Energie für wenigstens ein Leuchtmittel, wie z.B. eine Leuchtdiode, bekannt. Solche aktiv getaktete Konverter umfassen wenigstens einen Schalter und eine Energiespeichereinheit in Form einer Induktivität oder Drossel, wobei in bekannter Weise durch Taktung des wenigstens einen Schalters die Energiespeichereinheit geladen und entladen wird, um eine Spannung, einen Strom und/oder elektrische Energie für das wenigstens eine Leuchtmittel einzustellen. Durch die Steuerung der Taktung des wenigstens einen Schalters kann somit in bekannter Weise die Spannung, der Strom und/oder die elektrische Energie für das wenigstens eine Leuchtmittel gesteuert werden, wodurch die durch das wenigstens eine Leuchtmittel abgestrahlte bzw. emittierte Lichtmenge oder Lichtintensität gesteuert werden kann.

Die Steuerung des wenigstens einen Schalters eines solchen aktiv getakteten Konverters kann mit einer sogenannten Peak-Steuerung bzw. Schwellenwert-Steuerung erfolgen. Hierbei wird der durch die Energiespeichereinheit fließende Strom als Rückführgröße überwacht, um in Abhängigkeit eines Schwellenwerts für den Strom den wenigstens einen Schalter im eingeschalteten Zustand auszuschalten. Im Einzelnen: Im eingeschalteten Zustand des wenigstens einen Schalters wird der durch den wenigstens einen Schalter und die Energiespeichereinheit fließende Strom überwacht, wobei der wenigstens eine Schalter ausgeschaltet wird, sobald der Strom einen vorbestimmten Schwellenwert erreicht.

Üblicherweise wird hierzu der durch die Energiespeichereinheit fließende Strom erfasst und als Rückführgröße für die Steuerung des wenigstens einen Schalters verwendet. Hierbei wird typischerweise der Strom als Rückführgröße einem Komparator zugeführt, der diese Rückführgröße mit dem vorbestimmten Schwellenwert vergleicht. Der Ausgang des Komparators ist dann mit einer Steuereinheit zur Steuerung des Schalters verbunden, die das Ausgangssignal des Komparators, d.h. das Ergebnis des Vergleichs der Rückführgröße mit dem vorbestimmten Schwellenwert, mit ihrer Taktung abtastet und somit den Ausgangszustand des Komparators erfasst bzw. bestimmt. Diese Abtastung erfolgt typischerweise mit der Taktung der Steuereinheit.

Diese bekannte Schwellenwert-Steuerung hat den Nachteil, dass durch diese Art der Abtastung ein Fehler hinsichtlich der Erfassung des Zeitpunkts, zu dem der durch die Energiespeichereinheit des Konverters fließende Strom den vorbestimmten Schwellenwert erreicht, im Bereich einer Taktungseinheit bzw. eines Takts der Taktung der Steuereinheit auftreten kann.

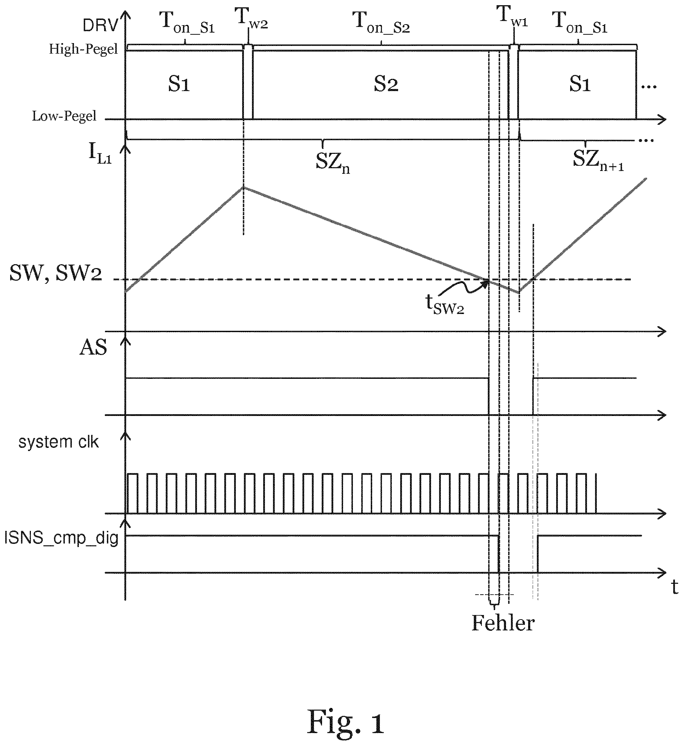

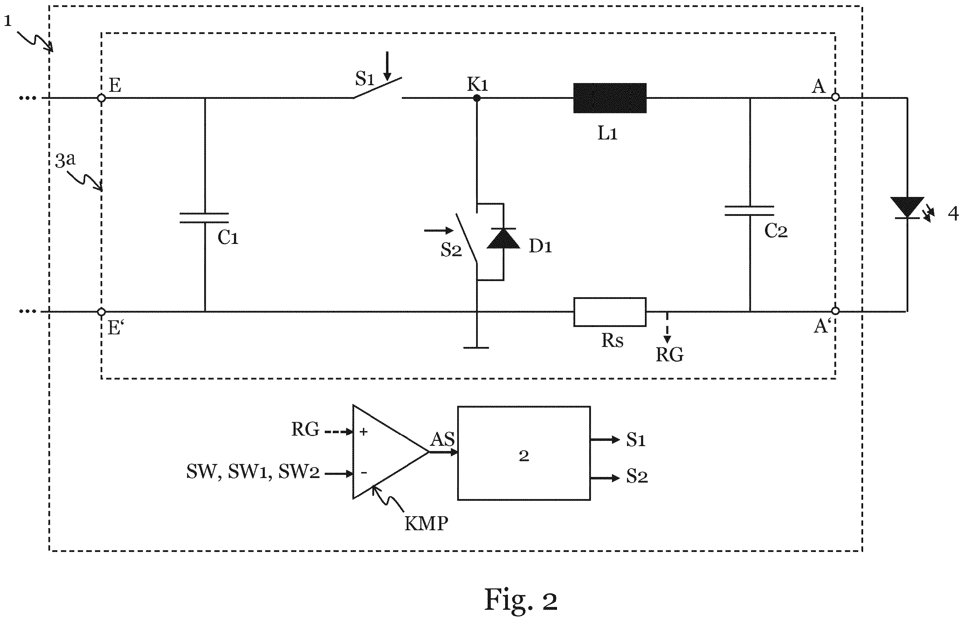

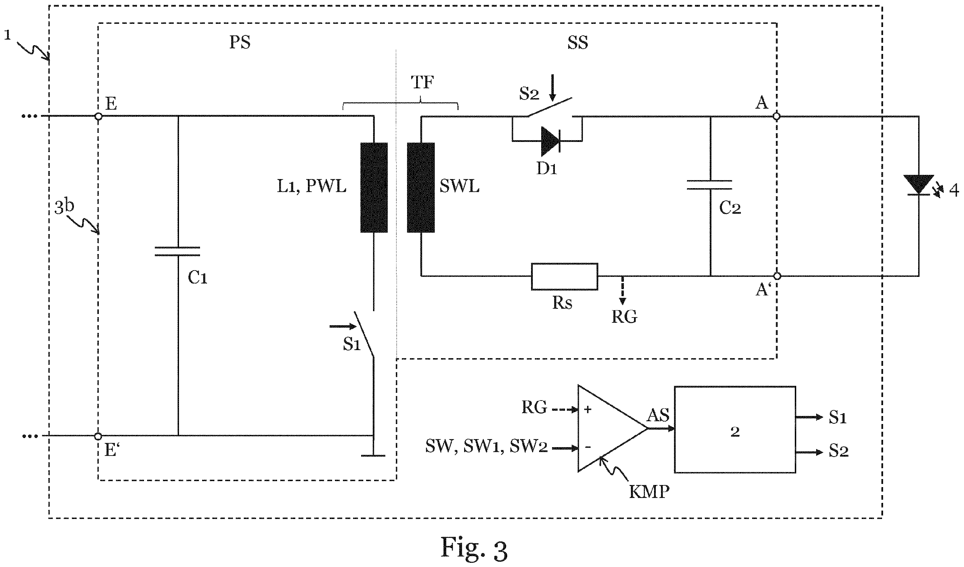

Ein solcher Fall ist in Figur 1 gezeigt, welche ein Beispiel für Steuersignale zur Steuerung wenigstens eines aktiv getakteten Konverters mit wenigstens zwei Schaltern S1 und S2 und einer Energiespeichereinheit L1 zeigt, wobei die wenigstens zwei Schalter S1 und S2 abwechselnd ein- und ausgeschaltet werden und jeweils eine Wartezeit T_{w1} und T_{w2} zwischen dem Ausschalten des einen Schalters und dem anschließenden Einschalten des anderen Schalters besteht. Der aktiv getaktete Konverter kann zum Beispiel einem Buck-Konverter 3a, wie in Figur 2 gezeigt, oder einem Flyback-Konverter 3b, wie in Figur 3 gezeigt, entsprechen, wobei der Schalter S1 des Konverters zur Steuerung des Ladens und Entladens der Energiespeichereinheit L1 des Konverters eingerichtet ist und der Schalter S2 des Konverters zur Bereitstellung eines Strompfads für den durch die Energiespeichereinheit L1 fließenden Strom I_{L1} beim Entladen der Energiespeichereinheit L1 eingerichtet ist.

Gemäß dem in Figur 1 gezeigten Verfahren zur Steuerung der wenigstens zwei Schalter S1 und S2 des aktiv getakteten Konverters wird der Schalter S1 abhängig von einer Zeitdauer T_{on_S1} ausgeschaltet bzw. abgeschaltet (Zeitdauer-Steuerung), wohingegen der Schalter S2 gemäß der vorstehend beschriebenen Schwellenwert-Steuerung gesteuert wird. D.h., der Schalter S2 soll ausgeschaltet werden, sobald der im eingeschalteten Zustand des Schalters S2 durch die Energiespeichereinheit L1 fließende Strom I_{L1} einen vorbestimmten Schwellenwert SW2 erreicht.

Gemäß der Figur 1 beginnt der durch die Energiespeichereinheit L1 fließende Strom I_{L1} zu sinken, wenn der Schalter S1 ausgeschaltet wird (das Steuersignal DRV für den Schalter S1 wechselt von einem "hohen" Zustand (High-Pegel) zu einem "niedrigen" Zustand (Low-Pegel)). Vorzugsweise kann der Strom I_{L1} nach dem Abschalten des Schalters S1 noch etwas ansteigen, da in den parasitären Komponenten des aktiv getakteten Konverters noch Energie gespeichert sein kann, die den Strom etwas weiter treibt.

Gemäß der Figur 1 ist in einem Schaltzyklus SZₙ zuerst der erste Schalter S1 der wenigstens zwei Schalter S1 und S2 des aktiv getakteten Konverters für die Einschaltdauer T_{on_S1} eingeschaltet, sodass der durch die Energiespeichereinheit L1 des Konverters fließende Strom I_{L1} sich vergrößert bzw. ansteigt und die Energiespeichereinheit L1 geladen wird. Nach Ablauf der Einschaltzeitdauer T_{on_S1} wird der erste Schalter S1 ausgeschaltet (das Steuersignal DRV für den Schalter S1 wechselt von einem "hohen" Zustand (High-Pegel) zu einem "niedrigen" Zustand (Low-Pegel)). Dies führt dazu, dass die Energiespeichereinheit L1 entladen wird und der Strom I_{L} durch die Energiespeichereinheit L1 sich verringert. Für eine Wartezeit T_{W2} sind dann die Steuersignale DRV für beide Schalter S1 und S2 im "niedrigen" Zustand (Low-Pegel), sodass sich beide Schalter S1 und S2 während der Wartezeit T_{w2} im ausgeschalteten Zustand befinden. Nach Ablauf der Wartezeit T_{W2} wird dann der zweite Schalter S2 eingeschaltet (das Steuersignal DRV für den Schalter S2 wechselt von einem "niedrigen" Zustand (Low-Pegel) zu einem "hohen" Zustand (High-Pegel)), während der erste Schalter S1 im ausgeschalteten Zustand bleibt. Dies führt dazu, dass die Energiespeichereinheit L1 über den zweiten Schalter S2 entladen wird und folglich verringert sich der durch die Energiespeichereinheit fließende Strom I_{L1} weiterhin über die Zeit. Gemäß der oben beschriebenen Schwellenwert-Steuerung zum Ausschalten des zweiten Schalters S2 soll der zweite Schalter S2 wieder ausgeschaltet werden, sobald der Strom I_{L} den vorbestimmten Schwellenwert SW2 erreicht.

Gemäß Figur 1 erfolgt aber das Ausschalten des Schalters S2, d.h. der Wechsel des Steuersignals DRV für den Schalter S2 von dem "hohen" Zustand zu dem "niedrigen" Zustand, nicht zu dem Zeitpunkt t_{SW2}, zu dem der Strom I_{L1} den Schwellenwert SW2 erreicht. Wie bereits vorstehend erläutert, wird dies durch die Abtastung des Ausgangssignals AS des Komparators verursacht, der den Strom I_{L1} als Rückführgröße mit dem Schwellenwert SW2 vergleicht. Gemäß dem in Figur 1 gezeigten Beispiel wird der Wert des Ausgangssignals AS des Komparators durch die Steuereinheit immer nur bei einer steigenden Flanke der Taktung system_clk der Steuereinheit abgetastet und somit erfasst bzw. bestimmt. Da aber der Zeitpunkt t_{SW2} des Erreichens des Schwellenwerts SW2 auf eine fallende Flanke der Taktung system_clk fällt (vgl. Figur 1), wird das Erreichen des Schwellenwerts SW2 erst bei der nächsten steigenden Flanke der Taktung system_clk abgetastet und somit erfasst (das Vergleichsergebnis des Komparators wiedergebende digitale Signal ISNS_cmp_dig wechselt erst bei der ersten steigenden Flanke der Taktung system_clk nach dem Zeitpunkt t_{SW2} von einem "hohen" Zustand zu einem "niedrigen" Zustand).

Aufgrund dieses durch die Taktung system_clk der Steuereinheit verursachten Fehlers kann der Fall eintreten, dass auch bei konstant bleibendem Schwellenwert SW2 der Zeitpunkt des Ausschaltens des Schalters S2 im Schaltzyklus SZₙ, der Zeitpunkt des Einschaltens des Schalters S1 im nachfolgenden Schaltzyklus SZₙ₊₁ und somit letztendlich auch die Lichtleistung, die von dem durch den Konverter elektrisch versorgten Leuchtmittel abgestrahlt wird, gegebenenfalls sehr niederfrequent und für das menschliche Auge sichtbar schwankt, wenn aufgrund der durch die Taktung system_clk der Steuereinheit verursachten Ungenauigkeit der Abtastung der Zustand eintritt, dass bei bestimmten Schaltzyklen bereits auf einen ersten Takt der Taktung hin die Veränderung des Ausgangssignal AS abgetastet und somit erfasst wird, während bei anderen Schaltzyklen auf einen früheren oder späteren Takt der Taktung hin (ein Inkrement weniger oder mehr) die Veränderung des Ausgangssignals AS abgetastet wird.

Die hierdurch verursachten kleineren Schwankungen hinsichtlich des durch die Energiespeichereinheit L1 fließenden mittleren Stroms und somit der Lichtleistung, die durch das ausgehend von dem Konverter elektrisch versorgten Leuchtmittel abgestrahlt wird, können insbesondere bei niedrigeren Dimmwerte für das menschliche Auge als Schwankungen wahrgenommen werden. Im Lichte dieses Standes der Technik ist es daher eine Aufgabe der vorliegenden Erfindung, eine Steuereinheit zur Steuerung eines aktiv getakteten Konverters zur elektrischen Versorgung wenigstens eines Leuchtmittels, vorzugsweis einer Leuchtdiode, bereitzustellen, mit dem die vorstehend beschriebenen Schwankungen in dem durch das Leuchtmittel abgestrahlten Licht reduziert bzw. verhindert werden können.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

Das Dokument DE 10 2015 206 243 A1 zeigt eine Hystereseregelung eines Abwärtswandlers mit lediglich einem Schaltelement.

Das Dokument WO 2016/134945 A1 zeigt einen Schaltregler zum Betreiben von Leuchtmitteln mit Spitzenstromwertsteuerung und Mittelstromwerterfassung. Auch hier wird ein Konverter mit nur einem Schaltelement genutzt.

Das Dokument DE 10 2015 102 715 A1 zeigt eine Leistungswandlung mit Verzögerungskompensation. Auch hier wird ein Konverter mit lediglich einem einzigen Schaltelement genutzt.

### 3. Ausführliche Beschreibung der Erfindung

Die gegenwärtige Erfindung wird durch den unabhängigen Anspruch 1 definiert. Im Folgenden dargestellte Ausführungsbeispiele, welche nicht in Einklang mit dem unabhängigen Anspruch 1 sind, sind als hilfreiche Beispiele zum Verständnis der Erfindung, nicht jedoch als Ausführungsbeispiele der Erfindung zu verstehen. Gemäß der vorliegenden Erfindung wird eine Steuereinheit zur Steuerung wenigstens eines aktiv getakteten Konverters zur elektrischen Versorgung wenigstens eines Leuchtmittels, insbesondere einer Leuchtdiode, bereitgestellt, wobei der aktiv getaktete Konverter wenigstens zwei Schalter und eine Energiespeichereinheit, insbesondere eine Induktivität oder eine Drossel, aufweist. Die erfindungsgemäße Steuereinheit ist dazu eingerichtet, durch Ein- und Ausschalten der wenigstens zwei Schalter ein Laden und Entladen der Energiespeichereinheit zu steuern; und die Steuereinheit ist dazu eingerichtet, den durch die Energiespeichereinheit fließenden Strom als Rückführgröße zu erhalten. Ferner ist die Steuereinheit dazu eingerichtet, während wenigstens eines Schaltzyklus ein Umschalten wenigstens eines Schalters der wenigstens zwei Schalter in Abhängigkeit einer Umschaltzeitdauer zu steuern; auf Basis der Rückführgröße die Zeitdauer zu bestimmen, zu der der durch die Energiespeichereinheit fließende Strom einen Schwellenwert erreicht; und die Umschaltzeitdauer für den nachfolgenden Schaltzyklus in Abhängigkeit der bestimmten Zeitdauer anzupassen.

Mit anderen Worten schlägt die vorliegende Erfindung vor, während wenigstens eines Schaltzyklus wenigstens einen Schalter eines aktiv getakteten Konverters zur elektrischen Versorgung wenigstens eines Leuchtmittels, insbesondere einer Leuchtdiode, derart zu steuern, dass das Umschalten des Schalters in Abhängigkeit eines Zeitablaufs, nämlich nach Ablauf einer Umschaltzeitdauer, erfolgt, wobei der während der Umschaltzeitdauer durch die Energiespeichereinheit des Konverters fließende Strom überwacht bzw. erfasst und als Rückführgröße der Steuereinheit zur Steuerung des Konverters zugeführt wird. Die Steuereinheit bestimmt während des Schaltzyklus die Zeitdauer, zu der der durch die Energiespeichereinheit fließende Strom einen Schwellenwert erreicht, und passt dann in Abhängigkeit dieser bestimmten Zeitdauer die Umschaltzeitdauer für den nachfolgenden Schaltzyklus an.

Somit ist die erfindungsgemäße Steuereinheit dazu eingerichtet, wenigstens einen Schalter der wenigstens zwei Schalter des aktiv getakteten Konverters mittels einer Kombination aus einer Zeitdauer-Steuerung und einer Schwellenwert-Steuerung zu steuern.

Folglich ist die erfindungsgemäße Steuereinheit vorteilhaft, da der oben beschriebene Abtastungsfehler hinsichtlich der Erfassung der Zeitdauer, zu der der durch die Energiespeichereinheit fließende Strom den Schwellenwert erreicht, den oben beschriebenen negativen Einfluss auf die Steuerung nicht hat.

Unter einer "*Umschaltzeitdauer*" wird in der vorliegenden Anmeldung die Zeitdauer verstanden, nach deren Ablauf ein Schalter des aktiv getakteten Konverters umgeschaltet wird. Die Umschaltzeitdauer entspricht vorzugsweise einer Einschaltzeitdauer, während der sich der jeweilige Schalter im eingeschalteten Zustand befindet. D.h. nach Ablauf der Einschaltzeitdauer wird der jeweilige eingeschaltete Schalter wieder ausgeschaltet.

Im Folgenden wird mit dem Begriff "*Schwellenwert*" ein vorbestimmter Stromwert bezeichnet. Vorzugsweise ist der Schwellenwert derart gewählt, dass ein gewünschter mittlerer Strom durch die Energiespeichereinheit und somit eine gewünschte Lichtleistung erzielt wird, die durch das ausgehend von dem Konverter elektrisch versorgte wenigstens eine Leuchtmittel abgestrahlt wird.

Unter einem "*Schaltzyklus*" wird ein Zeitraum verstanden, während dem die Energiespeichereinheit des Konverters einmal geladen und wieder entladen wird.

Vorzugsweise ist die Steuereinheit dazu eingerichtet, die wenigstens zwei Schalter des Konverters derart zu steuern, dass beide Schalter nie gleichzeitig im eingeschalteten Zustand sind. D.h., die Steuereinheit ist vorzugsweise dazu eingerichtet, die wenigstens zwei Schalter des Konverters derart entgegengesetzt ein- und auszuschalten, dass beide Schalter nie gleichzeitig im eingeschalteten Zustand sind.

Besonders vorzugsweise ist die Steuereinheit dazu eingerichtet, die wenigstens zwei Schalter des Konverters derart zu steuern, dass während des wenigstens einen Schaltzyklus zuerst ein erster Schalter eingeschaltet wird und sich für eine erste Einschaltzeitdauer im eingeschalteten Zustand befindet und anschließend der zweite Schalter eingeschaltet wird und sich für eine zweite Einschaltzeitdauer im eingeschalteten Zustand befindet; wobei, wenn ein Schalter eingeschaltet ist, sich der andere Schalter im ausgeschalteten Zustand befindet.

Vorzugsweise ist für die Steuerung der wenigstens zwei Schalter in dem wenigstens einen Schaltzyklus eine Wartezeit vorgesehen, sodass jeweils nach dem Ausschalten eines Schalters der andere Schalter erst nach Ablauf der Wartezeit ab dem Ausschaltzeitpunkt des Schalters eingeschaltet wird.

Die wenigstens zwei Schalter, insbesondere der erste und zweite Schalter, und die Energiespeichereinheit des Konverters sind vorzugsweise derart verschaltet, dass während der ersten Einschaltzeitdauer des ersten Schalters der Strom im Konverter ausgehend von einer am Eingang des Konverters anschließbaren elektrischen Energiequelle durch den ersten Schalter und die Energiespeichereinheit fließt, wobei die Energiespeichereinheit geladen wird; und dass während der zweiten Einschaltzeitdauer des zweiten Schalters der Strom im Konverter durch den zweiten Schalter und die Energiespeichereinheit fließt, wobei die Energiespeichereinheit entladen wird.

Hierbei ist der erste Schalter vorzugsweise dazu eingerichtet das Laden und Entladen der Energiespeichereinheit zu steuern und der zweite Schalter ist vorzugsweise dazu eingerichtet, im eingeschalteten Zustand einen Strompfad für den Strom durch die Energiespeichereinheit bereitzustellen, wenn diese aufgrund des ausgeschalteten Zustands des ersten Schalters entladen wird. Vorzugsweise steuert die erfindungsgemäße Steuereinheit den Konverter derart, dass in jedem Schaltzyklus zuerst der erste Schalter eingeschaltet wird, wobei der zweite Schalter ausgeschaltet ist, und anschließend der erste Schalter ausgeschaltet sowie der zweite Schalter, vorzugsweise mit einer vorbestimmten Wartezeit entsprechenden zeitlichen Verzögerung, eingeschaltet wird, um die Energiespeichereinheit während dem eingeschalteten Zustand des ersten Schalters zu laden und während dem ausgeschalteten Zustand des ersten Schalters zu entladen. Durch Steuerung der ersten Einschaltzeitdauer des ersten Schalters kann die Ladezeitdauer der Energiespeichereinheit gesteuert werden und durch Steuerung der ersten Ausschaltzeitdauer des ersten Schalters kann die Entladezeitdauer der Energiespeichereinheit gesteuert werden.

Vorzugsweise sind der erste Schalter und der zweite Schalter im eingeschalteten Zustand leitend und im ausgeschalteten Zustand nicht leitend.

Vorzugsweise entspricht der aktiv getaktete Konverter mit den wenigstens zwei Schaltern einem Buck-Konverter, wie er beispielhaft in Figur 2 gezeigt ist, oder einem Flyback-Konverter, wie er beispielhaft in Figur 3 gezeigt ist. Hierbei entspricht dann der vorstehend bezeichnete erste Schalter des Konverters dem Schalter S1 des in Figur 2 gezeigten Buck-Konverters 3a bzw. dem Schalter S1 des in Figur 3 gezeigten Flyback-Konverters 3b; der vorstehend bezeichnete zweite Schalter des Konverters entspricht dann dem Schalter S2 des in Figur 2 gezeigten Buck-Konverters 3a bzw. dem Schalter S2 des in Figur 3 gezeigten Flyback-Konverters 3b und die vorstehend bezeichnete Energiespeichereinheit entspricht dann der Induktivität L1 des in Figur 2 gezeigten Buck-Konverters 3a bzw. der Primärwicklung PWL des Transformators TF des in Figur 3 gezeigten Flyback-Konverters 3b, welche Primärwicklung PWL eine Induktivität L1 darstellt.

Der zweite Schalter des Konverters ist vorzugsweise parallel zu einer Diode des aktiv getakteten Konverters geschaltet, die in dem aktiv getakteten Konverter einen Rückfluss von Strom über den ersten Schalter zum Eingang des Konverters verhindert, wenn der erste Schalter eingeschaltete ist, um die Energiespeichereinheit des Konverters zu laden. Der zweite Schalter ist daher vorzugsweise ausgeschaltet, wenn der erste Schalter eingeschaltet ist.

Diese Diode entspricht der Diode D1 des in Figur 2 gezeigten Buck-Konverters 3a bzw. der Diode D1 auf der Sekundärseite SS des in Figur 3 gezeigten Flyback-Konverters 3b.

Vorzugsweise kann diese Diode auch komplett durch den zweiten Schalter ersetzt werden. Insbesondere wird die Funktion dieser Diode durch die Bodydiode eines MOSFET ersetzt, wenn der zweite Schalter ein MOSFET mit einer Bodydiode ist.

Die wenigstens zwei Schalter des aktiv getakteten Konverters, nämlich der vorstehend bezeichnete erste und zweite Schalter, sind vorzugsweise Transistoren, insbesondere Feldeffekt-Transistoren, wie z.B. MOSFET, oder Bipolar-Transistoren.

Die Steuereinheit ist vorzugsweise ein Mikrokontroller, ASIC (anwendungsspezifische integrierte Schaltung), oder Hybrid daraus. Als Steuereinheit kann auch ein FPGA (Field Programmable Gate Array) verwendet werden.

Vorzugsweise ist die Steuereinheit dazu eingerichtet, während des wenigstens einen Schaltzyklus zu bestimmen, ob eine Summe von der bestimmten Zeitdauer und einer Sicherheitszeitdauer innerhalb eines Sicherheitsbereichs der Umschaltzeitdauer liegt, und die Umschaltzeitdauer für den nachfolgenden Schaltzyklus in Abhängigkeit der Bestimmung hinsichtlich des Sicherheitsbereichs anzupassen.

Hierbei entspricht der Sicherheitsbereich einer vorbestimmten Zeitdauer am Ende der Umschaltzeitdauer, wobei vorzugsweise eine Hälfte des Sicherheitsbereichs innerhalb der Umschaltzeitdauer liegt und die andere Hälfte des Sicherheitsbereichs außerhalb der Umschaltzeitdauer liegt bzw. über das Ende der Umschaltzeitdauer hinausgeht.

Vorzugsweise entspricht der Sicherheitsbereich 2 Takten, besonders vorzugsweise 4 Takten und ganz besonders vorzugsweise 6 Takten der Taktung der Steuereinheit. Insbesondere hängt die Anzahl an Takten des Sicherheitsbereichs von der Taktung (Systemclock) der Steuereinheit und/oder der Auslegung der Analogkomponenten ab.

Dies ist vorteilhaft, da hierdurch eine Veränderung der Zeitdauer detektiert werden kann, die es braucht bis der durch die Energiespeichereinheit fließende Strom den Schwellenwert erreicht. Eine solche Veränderung kann durch einen Lastwechsel an dem Ausgang des Konverters verursacht werden.

Ferner ist die Steuereinheit vorzugsweise dazu eingerichtet, während des wenigstens einen Schaltzyklus die Umschaltzeitdauer für den nachfolgenden Schaltzyklus unverändert zu lassen, wenn die Summer von der bestimmten Zeitdauer und der Sicherheitszeitdauer innerhalb des Sicherheitsbereichs liegt; und die Umschaltzeitdauer für den nachfolgenden Schaltzyklus zu ändern, wenn die Summe von der bestimmten Zeitdauer und der Sicherheitszeitdauer außerhalb des Sicherheitsbereichs liegt.

Des Weiteren ist die Steuereinheit vorzugsweise dazu eingerichtet, die Umschaltzeitdauer derart zu ändern, dass im nachfolgenden Schaltzyklus die Umschaltzeitdauer der Summe von der bestimmten Zeitdauer und der Sicherheitszeitdauer entspricht.

Mit anderen Worten, wenn die Steuereinheit bestimmt, dass während des wenigstens einen Schaltzyklus die Summe von der Zeitdauer, die es braucht bis der durch die Energiespeichereinheit fließende Strom den Schwellenwert erreicht, und der Sicherheitszeitdauer außerhalb des Sicherheitsbereichs liegt, dann ändert die Steuereinheit die Umschaltzeitdauer für den nachfolgenden Schaltzyklus durch Einstellen der Umschaltzeitdauer für den nachfolgenden Schaltzyklus als Summe von der bestimmten Zeitdauer, zu der der Strom den Schwellenwert erreicht, und der Sicherheitszeitdauer.

Vorzugsweise ist die Steuereinheit dazu eingerichtet, während wenigstens eines ersten Schaltzyklus auf Basis der Rückführgröße die Zeitdauer zu bestimmen, zu der der durch die Energiespeichereinheit fließende Strom den Schwellenwert erreicht; den wenigstens einen Schalter in Abhängigkeit der bestimmten Zeitdauer umzuschalten; und die Umschaltzeitdauer für den nachfolgenden Schaltzyklus als Summe von der bestimmten Zeitdauer und der Sicherheitszeitdauer einzustellen.

Mit anderen Worten ist die Steuereinheit vorzugsweise dazu eingerichtet, in wenigstens einem Initialisierungs-Schaltzyklus die Umschaltzeitdauer einzustellen. Während diesem Initialisierung-Schaltzyklus steuert die Steuereinheit vorzugsweise den wenigsten einen Schalter der wenigstens zwei Schalter des Konverters derart, dass der wenigstens eine Schalter umgeschaltet wird, sobald der durch die Energiespeichereinheit fließende Strom den Schwellenwert erreicht. Ferner bestimmt bzw. detektiert die Steuereinheit vorzugsweise während dieses Initialisierung-Schaltzyklus den Zeitpunkt, zu dem der durch die Energiespeichereinheit fließende Strom den Schwellenwert erreicht.

Die Steuereinheit stellt dann vorzugsweise die Umschaltzeitdauer für den nachfolgenden Schaltzyklus als Summe von der bestimmten Zeitdauer hinsichtlich des Erreichens des Schwellenwerts und der Sicherheitszeitdauer ein.

Mit anderen Worten steuert die Steuereinheit vorzugsweise in wenigstens einem Initialisierungs-Schaltzyklus den wenigstens einen Schalter gemäß einer Schwellenwert-Steuerung und stellt die Umschaltzeitdauer für die Steuerung wenigstens eines Schalters in dem nachfolgenden Schaltzyklus ein, die einer Kombination aus einer Zeitablauf-Steuerung und einer Schwellenwert-Steuerung entspricht.

Vorzugsweise entspricht die Sicherheitszeitdauer einer vorbestimmten Anzahl an Takten der Taktung der Steuereinheit, wobei die vorbestimmte Anzahl an Takten vorzugsweise zwischen 1 und 10 Takten, besonders vorzugsweise zwischen 4 und 8 Takten entspricht. Insbesondere hängt die vorbestimmte Anzahl an Takten von der Taktung (Systemclock) der Steuereinheit und/oder der Auslegung der Analogkomponenten ab.

Vorzugsweise weist die Steuereinheit eine Speichereinheit zum Speichern der Umschaltzeitdauer, des Sicherheitsbereichs, der Sicherheitszeitdauer, des Schwellenwerts und/oder der Rückführgröße auf.

Ferner weist die Steuereinheit vorzugsweise einen Komparator zum Vergleichen des durch die Energiespeichereinheit fließenden Stroms mit dem Schwellenwert auf, wobei die Steuereinheit dazu eingerichtet ist, das Ausgangssignal des Komparators gemäß ihrer Taktung abzutasten.

Vorzugsweise ist die Steuereinheit dazu eingerichtet, die wenigstens zwei Schalter derart zu steuern, dass zu einem Zeitpunkt immer nur einer der zwei Schalter leitend ist.

Vorzugsweise sind die wenigstens zwei Schalter und die Energiespeichereinheit des aktiv getakteten Konverters derart verschaltet, dass ein erster Schalter der wenigstens zwei Schalter dazu eingerichtet ist, im eingeschalteten Zustand einen Strompfad für den durch die Energiespeichereinheit fließenden Strom zum Laden der Energiespeichereinheit bereitzustellen; und dass der zweite Schalter der wenigstens zwei Schalter dazu eingerichtet ist, im eingeschalteten Zustand einen Strompfad für den durch die Energiespeichereinheit fließenden Strom beim Entladen der Energiespeichereinheit bereitzustellen. Hierbei ist vorzugsweise parallel zu dem zweiten Schalter eine Diode geschaltet.

Somit entspricht der vorstehend bezeichnete erste Schalter dem Schalter S1 des in Figur 2 gezeigten Buck-Konverters 3a bzw. des in Figur 3 gezeigten Flyback-Konverters 3b und der vorstehend bezeichnete zweite Schalter dem Schalter S2 des in Figur 2 gezeigten Buck-Konverters 3a bzw. des in Figur 3 gezeigten Flyback-Konverters 3b. Die parallel zu dem zweiten Schalter optional geschaltete Diode entspricht der Diode D1 des in Figur 2 gezeigten Buck-Konverters 3a bzw. des in Figur 3 gezeigten Flyback-Konverters 3b.

Vorzugsweise ist die Steuereinheit dazu eingerichtet, während des wenigstens einen Schaltzyklus, den ersten Schalter einzuschalten und den zweiten Schalter auszuschalten, um die Energiespeichereinheit zu laden; und den ersten Schalter auszuschalten und den zweiten Schalter einzuschalten, um die Energiespeichereinheit zu entladen.

Ferner ist die Steuereinheit vorzugsweise dazu eingerichtet, während des wenigstens einen Schaltzyklus die wenigstens zwei Schalter derart zu steuern, dass der erste Schalter erst nach einer ersten Wartezeit nach dem Ausschalten des zweiten Schalters eingeschaltet wird; und dass der zweite Schalter erst nach einer zweiten Wartezeit nach dem Ausschalten des ersten Schalters eingeschaltet wird. Hierbei entsprechen vorzugsweise die erste Wartezeit und die zweite Wartezeit der gleichen Zeitdauer.

Hierdurch wird sichergestellt, dass zu keinem Zeitpunkt die wenigstens zwei Konverter gleichzeitig im eingeschalteten Zustand sind.

Vorzugsweiseist die Steuereinheit dazu eingerichtet, während des wenigstens einen Schaltzyklus das Ausschalten des ersten Schalters in Abhängigkeit einer ersten Einschaltzeitdauer zu steuern; auf Basis der Rückführgröße die Ladezeitdauer zu bestimmen, zu der der durch die Energiespeichereinheit fließende Strom einen ersten Schwellenwert, insbesondere oberen Schwellenwert, erreicht, die erste Einschaltzeitdauer für den nachfolgenden Schaltzyklus in Abhängigkeit der bestimmten Ladezeitdauer anzupassen. Alternativ oder zusätzlich ist die Steuereinheit vorzugsweise dazu eingerichtet, während des wenigstens einen Schaltzyklus das Ausschalten des zweiten Schalters in Abhängigkeit einer zweiten Einschaltzeitdauer zu steuern; auf Basis der Rückführgröße die Entladezeitdauer zu bestimmen, zu der der durch die Energiespeichereinheit fließende Strom einen zweiten Schwellenwert, insbesondere unteren Schwellenwert, erreicht, und die zweite Einschaltzeitdauer für den nachfolgenden Schaltzyklus in Abhängigkeit der bestimmten Entladezeitdauer anzupassen.

Mit anderen Worten ist die Steuereinheit vorzugsweise dazu eingerichtet, während des wenigstens einen Schaltzyklus das Ausschalten des ersten Schalters und/oder das Ausschalten des zweiten Schalters mittels der erfindungsgemäßen Kombination aus einer Zeitdauer-Steuerung und einer Schwellenwert-Steuerung zu steuern.

D.h., die Steuereinheit ist vorzugsweise dazu eingerichtet, nur den ersten Schalter oder nur den zweiten Schalter oder beide Schalter, den ersten und zweiten Schalter, mittels der erfindungsgemäßen Kombination aus einer Zeitdauer-Steuerung und einer Schwellenwert-Steuerung zu steuern.

Für den Fall, dass nur einer der zwei Schalter des aktiv getakteten Konverters mittels der erfindungsgemäßen Kombination aus einer Zeitdauer-Steuerung und einer Schwellenwert-Steuerung gesteuert wird, wird vorzugsweise der andere Schalter, insbesondere mittels einer Zeitdauer-Steuerung, derart gesteuert, dass der erwünschte mittlere Strom am Ausgang des Konverters durch die Taktung des Ladens und Entladens der Energiespeichereinheit erreicht wird.

Ferner ist die Steuereinheit vorzugsweise dazu eingerichtet, während des wenigstens einen Schaltzyklus den ersten Schalter nach Ablauf der ersten Einschaltzeitdauer ausgehend von dem Einschaltzeitpunkt des ersten Schalters auszuschalten; auf Basis der Rückführgröße die Ladezeitdauer ausgehend von dem Einschaltzeitpunkt des ersten Schalters bis zu dem Zeitpunkt zu bestimmen, zu dem der durch die Energiespeichereinheit fließende Strom den ersten Schwellenwert erreicht; und die erste Einschaltzeitdauer für den nachfolgenden Schaltzyklus in Abhängigkeit der bestimmten Ladezeitdauer anzupassen. Alternativ oder zusätzlich ist die Steuereinheit vorzugsweise dazu eingerichtet ist, während des wenigstens einen Schaltzyklus den zweiten Schalter nach Ablauf der zweiten Einschaltzeitdauer ausgehend von dem Einschaltzeitpunkt des zweiten Schalters auszuschalten; auf Basis der Rückführgröße die Entladezeitdauer ausgehend von dem Einschaltzeitpunkt des zweiten Schalters bis zu dem Zeitpunkt zu bestimmen, zu dem der durch die Energiespeichereinheit fließende Strom den zweiten Schwellenwert erreicht; und die zweite Einschaltzeitdauer für den nachfolgenden Schaltzyklus in Abhängigkeit der bestimmten Entladezeitdauer anzupassen.

Des Weiteren ist die Steuereinheit vorzugsweise dazu eingerichtet, während des wenigstens einen Schaltzyklus zu bestimmen, ob die Summe von der bestimmten Ladezeitdauer und der Sicherheitszeitdauer innerhalb eines ersten Sicherheitsbereichs der ersten Einschaltzeitdauer liegt, und die erste Einschaltzeitdauer für den nachfolgenden Schaltzyklus in Abhängigkeit der Bestimmung hinsichtlich des ersten Sicherheitsbereichs anzupassen; und/oder zu bestimmen, ob die Summe von der bestimmten Entladezeitdauer und der Sicherheitszeitdauer innerhalb eines zweiten Sicherheitsbereichs der zweiten Einschaltzeitdauer liegt, und die zweite Einschaltzeitdauer für den nachfolgenden Schaltzyklus in Abhängigkeit der Bestimmung hinsichtlich des zweiten Sicherheitsbereichs anzupassen. Hierbei entsprechen vorzugsweise der erste Sicherheitsbereich und/oder der zweite Sicherheitsbereich dem gleichen Sicherheitsbereich, insbesondere dem Sicherheitsbereich der Umschaltzeitdauer.

Vorzugsweiseist die Steuereinheit dazu eingerichtet, während des wenigstens einen Schaltzyklus die erste Einschaltzeitdauer für den nachfolgenden Schaltzyklus unverändert zu lassen, wenn die Summe von der bestimmten Ladezeitdauer und der Sicherheitszeitdauer innerhalb des ersten Sicherheitsbereichs liegt; und die erste Einschaltzeitdauer für den nachfolgenden Schaltzyklus zu ändern, wenn die Summe von der bestimmten Ladezeitdauer und der Sicherheitszeitdauer außerhalb des ersten Sicherheitsbereichs liegt. Alternativ oder zusätzlich ist die Steuereinheit vorzugsweise dazu eingerichtet, während des wenigstens einen Schaltzyklus die zweite Einschaltzeitdauer für den nachfolgenden Schaltzyklus unverändert zu lassen, wenn die Summe von der bestimmten Entladezeitdauer und der Sicherheitszeitdauer innerhalb des zweiten Sicherheitsbereichs liegt; und die zweite Einschaltzeitdauer für den nachfolgenden Schaltzyklus zu ändern, wenn die Summe von der bestimmten Entladezeitdauer und der Sicherheitszeitdauer außerhalb des zweiten Sicherheitsbereichs liegt.

Ferner ist die Steuereinheit vorzugsweise dazu eingerichtet, die erste Einschaltzeitdauer derart zu ändern, dass im nachfolgenden Schaltzyklus die erste Einschaltzeitdauer der Summe von der bestimmten Ladezeitdauer und der Sicherheitszeitdauer entspricht; und/oder die Steuereinheit ist vorzugsweise dazu eingerichtet, die zweite Einschaltzeitdauer derart zu ändern, dass im nachfolgenden Schaltzyklus die zweite Einschaltzeitdauer der Summe von der bestimmten Entladezeitdauer und der Sicherheitszeitdauer entspricht.

Des Weiteren ist die Steuereinheit vorzugsweise dazu eingerichtet ist, während wenigstens eines ersten Schaltzyklus auf Basis der Rückführgröße die Ladezeitdauer zu bestimmen, zu der der durch die Energiespeichereinheit fließende Strom den ersten Schwellenwert erreicht; den ersten Schalter in Abhängigkeit der bestimmten Ladezeitdauer auszuschalten; die erste Einschaltzeitdauer als Summe von der bestimmten Ladezeitdauer und der Sicherheitszeitdauer einzustellen. Alternativ oder zusätzlich ist die Steuereinheit vorzugsweise dazu eingerichtet ist, während wenigstens eines ersten Schaltzyklus auf Basis der Rückführgröße die Entladezeitdauer zu bestimmen, zu der der durch die Energiespeichereinheit fließende Strom den zweiten Schwellenwert erreicht; den zweiten Schalter in Abhängigkeit der bestimmten Entladezeitdauer auszuschalten; und die zweite Einschaltzeitdauer als Summe von der bestimmten Entladezeitdauer und der Sicherheitszeitdauer einzustellen.

Mit anderen Worten ist die Steuereinheit vorzugsweise dazu eingerichtet, in wenigstens einem Initialisierungs-Schaltzyklus (erster Schaltzyklus) die erste Einschaltzeitdauer für den ersten Schalter und/oder die zweite Einschaltzeitdauer für den zweiten Schalter einzustellen. Insbesondere ist die Steuereinheit vorzugsweise dazu eingerichtet, in dem wenigstens einen Initialisierungs-Schaltzyklus nur die erste Einschaltzeitdauer einzustellen, wenn die Steuereinheit dazu eingerichtet ist, nur den ersten Schalter mittels der erfindungsgemäßen Kombination aus einer Zeitdauer-Steuerung und einer Schwellenwert-Steuerung zu steuern; oder nur die zweite Einschaltzeitdauer einzustellen, wenn die Steuereinheit dazu eingerichtet ist, nur den zweiten Schalter mittels der erfindungsgemäßen Kombination aus einer Zeitdauer-Steuerung und einer Schwellenwert-Steuerung zu steuern. Die Steuereinheit ist vorzugsweise dazu eingerichtet, in dem wenigstens einen Initialisierungs-Schaltzyklus die erste Einschaltzeitdauer und die zweite Einschaltzeitdauer einzustellen, wenn die Steuereinheit dazu eingerichtet ist, den ersten Schalter und den zweiten Schalter mittels der erfindungsgemäßen Kombination aus einer Zeitdauer-Steuerung und einer Schwellenwert-Steuerung zu steuern.

Zur Einstellung der ersten Einschaltzeitdauer steuert die Steuereinheit vorzugsweise während diesem Initialisierung-Schaltzyklus den ersten Schalter derart, dass der erste Schalter ausgeschaltet wird, sobald der durch die Energiespeichereinheit fließende Strom den ersten Schwellenwert erreicht. Ferner bestimmt bzw. detektiert die Steuereinheit vorzugsweise während dieses Initialisierung-Schaltzyklus die Zeitdauer, zu der der durch die Energiespeichereinheit fließende Strom den ersten Schwellenwert erreicht. Die Steuereinheit stellt dann vorzugsweise die erste Einschaltzeitdauer für den nachfolgenden Schaltzyklus als Summe von der bestimmten Zeitdauer hinsichtlich des Erreichens des ersten Schwellenwerts und der Sicherheitszeitdauer ein.

Mit anderen Worten, zur Einstellung der ersten Einschaltzeitdauer steuert die Steuereinheit vorzugsweise in wenigstens einem Initialisierungs-Schaltzyklus den ersten Schalter gemäß einer Schwellenwert-Steuerung und stellt die Einschaltzeitdauer für die Steuerung des ersten Schalters in dem nachfolgenden Schaltzyklus ein, die einer Kombination aus einer Zeitablauf-Steuerung und einer Schwellenwert-Steuerung entspricht.

Zur Einstellung der zweiten Einschaltzeitdauer steuert die Steuereinheit vorzugsweise während diesem Initialisierung-Schaltzyklus den zweiten Schalter derart, dass der zweite Schalter ausgeschaltet wird, sobald der durch die Energiespeichereinheit fließende Strom den zweiten Schwellenwert erreicht. Ferner bestimmt bzw. detektiert die Steuereinheit vorzugsweise während dieses Initialisierung-Schaltzyklus die Zeitdauer, zu der der durch die Energiespeichereinheit fließende Strom den zweiten Schwellenwert erreicht. Die Steuereinheit stellt dann vorzugsweise die zweite Einschaltzeitdauer für den nachfolgenden Schaltzyklus als Summe von der bestimmten Zeitdauer hinsichtlich des Erreichens des zweiten Schwellenwerts und der Sicherheitszeitdauer ein.

Mit anderen Worten, zur Einstellung der zweiten Einschaltzeitdauer steuert die Steuereinheit vorzugsweise in wenigstens einem Initialisierungs-Schaltzyklus den zweiten Schalter gemäß einer Schwellenwert-Steuerung und stellt die Einschaltzeitdauer für die Steuerung des zweiten Schalters in dem nachfolgenden Schaltzyklus ein, die einer Kombination aus einer Zeitablauf-Steuerung und einer Schwellenwert-Steuerung entspricht.

Um die erfindungsgemäße Steuereinheit zu erreichen können die vorstehenden optionalen Merkmale beliebig kombiniert werden.

Gemäß der vorliegenden Erfindung wird ferner ein Betriebsgerät zum Betreiben wenigstens eines Leuchtmittels, insbesondere Leuchtdiode, bereitgestellt. Das erfindungsgemäße Betriebsgerät umfasst eine vorstehend beschriebene erfindungsgemäße Steuereinheit und wenigstens einen aktiv getakteten Konverter aufweisend wenigstens zwei Schalter und eine Energiespeichereinheit, insbesondere Induktivität oder Drossel, die derart miteinander verschaltet sind, dass durch Taktung der zwei Schalter ein Laden und Entladen der Energiespeichereinheit steuerbar ist. Die Steuereinheit ist dazu eingerichtet, die wenigstens zwei Schalter ein- und auszuschalten, wobei der Steuereinheit der durch die Energiespeichereinheit fließende Strom ausgehend von dem Konverter zuführbar ist. Die Steuereinheit ist ferner dazu eingerichtet, während wenigstens eines Schaltzyklus ein Umschalten wenigstens eines Schalters der wenigstens zwei Schalter in Abhängigkeit einer Umschaltzeitdauer zu steuern; auf Basis der Rückführgröße die Zeitdauer zu bestimmen, zu der der durch die Energiespeichereinheit fließende Strom einen Schwellenwert erreicht; und die Umschaltzeitdauer für den nachfolgenden Schaltzyklus in Abhängigkeit der bestimmten Zeitdauer anzupassen.

Die wenigstens zwei Schalter des aktiv getakteten Konverters, nämlich der vorstehend bezeichnete erste und zweite Schalter, sind vorzugsweise Transistoren, insbesondere Feldeffekt-Transistoren, wie z.B. MOSFET, oder Bipolar-Transistoren.

Die Energiespeichereinheit des aktiv getakteten Konverters ist vorzugsweise eine Induktivität oder Drossel.

Die Steuereinheit ist vorzugsweise ein Mikrokontroller, ASIC (anwendungsspezifische integrierte Schaltung), oder Hybrid daraus. Als Steuereinheit kann auch ein FPGA (Field Programmable Gate Array) verwendet werden.

Vorzugsweise weist das erfindungsgemäße Betriebsgerät einen Komparator zum Vergleichen des durch die Energiespeichereinheit fließenden Stroms mit dem Schwellenwert auf, wobei die Steuereinheit dazu eingerichtet ist, das Ausgangssignal des Komparators gemäß ihrer Taktung abzutasten.

In einem bevorzugten Ausführungsbeispiel des erfindungsgemäßen Betriebsgerätes ist der wenigstens eine aktiv getaktete Konverter vorzugsweise ein Buck-Konverter, insbesondere ein synchroner Buck-Konverter. Hierbei ist ein erster Schalter der wenigstens zwei Schalter an einer Seite mit dem Eingang des Buck-Konverters zum Anschließen einer elektrischen Energiequelle und an der anderen Seite mit einer ersten Seite der Energiespeichereinheit elektrisch verbunden; und der zweite Schalter der wenigstens zwei Schalter ist an einer Seite mit dem Knoten zwischen dem ersten Schalter und der ersten Seite der elektrischen Energiespeichereinheit und an der anderen Seite über eine weitere Energiespeichereinheit, insbesondere eine Kapazität, mit der zweiten Seite der Energiespeichereinheit elektrisch verbunden.

In einem weiteren bevorzugten Ausführungsbeispiel des erfindungsgemäßen Betriebsgerätes ist der wenigstens eine aktiv getaktete Konverter ein Flyback-Konverter, insbesondere ein synchroner Flyback-Konverter, der einen Transformator zum galvanischen Trennen des auf der Primärseite vorgesehenen Eingangs zum Anschließen einer elektrischen Energiequelle von dem auf der Sekundärseite vorgesehenen Ausgang zum Anschließen des wenigstens einen Leuchtmittels aufweist. Hierbei umfasst die Energiespeichereinheit zumindest die Primärwicklung des Transformators und auf der Primärseite ist ein erster Schalter der wenigstens zwei Schalter mit der Primärwicklung in Reihe elektrisch verbunden. Ferner ist der zweite Schalter der wenigstens zwei Schalter auf der Sekundärseite an einer Seite mit der Sekundärwicklung des Transformators und auf der anderen Seite mit einer weiteren Energiespeichereinheit, insbesondere einer Kapazität, elektrisch verbunden.

Vorzugsweiseist die Steuereinheit des erfindungsgemäßen Betriebsgerätes dazu eingerichtet, während des wenigstens einen Schaltzyklus den ersten Schalter einzuschalten und den zweiten Schalter auszuschalten, um die Energiespeichereinheit zu laden; und den ersten Schalter auszuschalten und den zweiten Schalter einzuschalten, um die Energiespeichereinheit zu entladen.

Fernerist die Steuereinheit vorzugsweise dazu eingerichtet, während des wenigstens einen Schaltzyklus das Ausschalten des ersten Schalters in Abhängigkeit einer ersten Einschaltzeitdauer zu steuern; auf Basis der Rückführgröße die Ladezeitdauer zu bestimmen, zu der der durch die Energiespeichereinheit fließende Strom einen ersten Schwellenwert, insbesondere oberen Schwellenwert, erreicht; und die erste Einschaltzeitdauer für den nachfolgenden Schaltzyklus in Abhängigkeit der bestimmten Ladezeitdauer anzupassen. Alternativ oder zusätzlich ist die Steuereinheit vorzugsweise dazu eingerichtet, während des wenigstens einen Schaltzyklus das Ausschalten des zweiten Schalters in Abhängigkeit einer zweiten Einschaltzeitdauer zu steuern; auf Basis der Rückführgröße die Entladezeitdauer zu bestimmen, zu der der durch die Energiespeichereinheit fließende Strom einen zweiten Schwellenwert, insbesondere unteren Schwellenwert, erreicht; und die zweite Einschaltzeitdauer für den nachfolgenden Schaltzyklus in Abhängigkeit der bestimmten Entladezeitdauer anzupassen.

Um das erfindungsgemäße Betriebsgerät zu erreichen können die vorstehenden optionalen Merkmale beliebig kombiniert werden.

Gemäß der vorliegenden Erfindung wird ferner eine Leuchte bereitgestellt, die wenigstens ein vorstehend beschriebenes erfindungsgemäßes Betriebsgerät und wenigstens ein Leuchtmittel, insbesondere eine Leuchtdiode, umfasst; wobei das wenigstens eine Betriebsgerät dazu eingerichtet ist, das wenigstens eine Leuchtmittel zu betreiben.

Mit anderen Worten ist das wenigstens eine Betriebsgerät der erfindungsgemäßen Leuchte dazu eingerichtet die eine oder mehreren Leuchtmittel mit elektrischer Energie zu versorgen.

Das wenigstens eine Leuchtmittel ist vorzugsweise eine Leuchtdiode, wie z.B. eine organische oder anorganische Leuchtdiode oder eine Leuchtdiode mit Primäranregung und/oder Sekundäranregung.

Vorzugsweise umfasst die Leuchte mehr als ein Leuchtmittel, die dann miteinander parallel und/oder in Reihe verschaltet werden können, um eine oder mehrere Leuchtmittelstrecken zu bilden.

Für den Fall, dass die Leuchte mehrere Leuchtmittel umfasst kann die Leuchte nur ein Betriebsgerät aufweisen, das dazu eingerichtet ist alle Leuchtmittel der Leuchte zu betreiben. Die Leuchte kann aber auch mehrere Betriebsgeräte aufweisen, wobei jedes Betriebsgerät dann zum Betreiben eines einzelnen Leuchtmittels oder einer Gruppe von Leuchtmitteln eingerichtet ist.

Gemäß der vorliegenden Erfindung wird des Weiteren ein Verfahren zur Steuerung wenigstens eines aktiv getakteten Konverters zur elektrischen Versorgung wenigstens eines Leuchtmittels, insbesondere einer Leuchtdiode, bereitgestellt, wobei der wenigstens eine aktiv getaktete Konverter wenigstens zwei Schalter und eine Energiespeichereinheit, insbesondere eine Induktivität oder Drossel, aufweist. Gemäß dem erfindungsgemäßen Verfahren wird der durch die Energiespeichereinheit fließenden Strom als Rückführgröße erfasst; und während wenigstens eines Schaltzyklus wird wenigstens ein Schalter der wenigstens zwei Schalter in Abhängigkeit einer Umschaltzeitdauer umgeschaltet; auf Basis der Rückführgröße die Zeitdauer bestimmt, zu der der durch die Energiespeichereinheit fließende Strom einen Schwellenwert erreicht, und die Umschaltzeitdauer für den nachfolgenden Schaltzyklus in Abhängigkeit der bestimmten Zeitdauer angepasst.

Gemäß dem erfindungsgemäßen Verfahren wird vorzugsweise während des wenigstens einen Schaltzyklus bestimmt, ob eine Summe von der bestimmten Zeitdauer und einer Sicherheitszeitdauer innerhalb eines Sicherheitsbereichs der Umschaltzeitdauer liegt, und die Umschaltzeitdauer für den nachfolgenden Schaltzyklus wird in Abhängigkeit der Bestimmung hinsichtlich des Sicherheitsbereichs angepasst.

Dies ist vorteilhaft, da hierdurch eine Veränderung der Zeitdauer detektiert werden kann, die es braucht bis der durch die Energiespeichereinheit fließende Strom den Schwellenwert erreicht. Eine solche Veränderung kann durch einen Lastwechsel an dem Ausgang des Konverters verursacht werden.

Ferner wird vorzugsweise gemäß dem erfindungsgemäßen Verfahren während des wenigstens einen Schaltzyklus die Umschaltzeitdauer für den nachfolgenden Schaltzyklus unverändert gelassen, wenn die Summe von der bestimmten Zeitdauer und der Sicherheitszeitdauer innerhalb des Sicherheitsbereichs liegt; und die Umschaltzeitdauer für den nachfolgenden Schaltzyklus geändert, wenn die Summe von der bestimmten Zeitdauer und der Sicherheitszeitdauer außerhalb des Sicherheitsbereichs liegt.

Des Weiteren wird vorzugsweise gemäß dem erfindungsgemäßen Verfahren die Umschaltzeitdauer derart geändert, dass im nachfolgenden Schaltzyklus die Umschaltzeitdauer der Summe von der bestimmten Zeitdauer und der Sicherheitszeitdauer entspricht.

Mit anderen Worten, wenn bestimmt wird, dass während des wenigstens einen Schaltzyklus die Summe von der Zeitdauer, die es braucht bis der durch die Energiespeichereinheit fließende Strom den Schwellenwert erreicht, und der Sicherheitszeitdauer außerhalb des Sicherheitsbereichs liegt, dann wird die Umschaltzeitdauer für den nachfolgenden Schaltzyklus durch Einstellen der Umschaltzeitdauer für den nachfolgenden Schaltzyklus als Summe von der bestimmten Zeitdauer, zu der der Strom den Schwellenwert erreicht, und der Sicherheitszeitdauer geändert.

Vorzugsweise wird gemäß dem erfindungsgemäßen Verfahren während wenigstens eines ersten Schaltzyklus auf Basis der Rückführgröße die Zeitdauer bestimmt, zu der der durch die Energiespeichereinheit fließende Strom den Schwellenwert erreicht; der wenigstens eine Schalter in Abhängigkeit der bestimmten Zeitdauer umgeschaltet; und die Umschaltzeitdauer für den nachfolgenden Schaltzyklus als Summe von der bestimmten Zeitdauer und der Sicherheitszeitdauer eingestellt.

Vorzugsweise sind die wenigstens zwei Schalter und die Energiespeichereinheit des aktiv getakteten Konverters derart verschaltet, dass ein erster Schalter der wenigstens zwei Schalter im eingeschalteten Zustand einen Strompfad für den durch die Energiespeichereinheit fließenden Strom zum Laden der Energiespeichereinheit bereitstellt; und dass der zweite Schalter der wenigstens zwei Schalter im eingeschalteten Zustand einen Strompfad für den durch die Energiespeichereinheit fließenden Strom beim Entladen der Energiespeichereinheit bereitstellt; wobei gemäß dem Verfahren während des wenigstens einen Schaltzyklus der ersten Schalter eingeschaltet und der zweite Schalter ausgeschaltet wird, um die Energiespeichereinheit zu laden, und der erste Schalter ausgeschaltet und der zweite Schalter eingeschalten, um die Energiespeichereinheit zu entladen.

Gemäß dem erfindungsgemäßen Verfahren wird vorzugsweise während des wenigstens einen Schaltzyklus der erste Schalter in Abhängigkeit einer ersten Einschaltzeitdauer ausgeschaltet; auf Basis der Rückführgröße die Ladezeitdauer bestimmt, zu der der durch die Energiespeichereinheit fließende Strom einen ersten Schwellenwert, insbesondere oberen Schwellenwert erreicht; und die erste Einschaltzeitdauer für den nachfolgenden Schaltzyklus in Abhängigkeit der bestimmten Ladezeitdauer angepasst. Alternativ oder zusätzlich wird gemäß dem erfindungsgemäßen Verfahren vorzugsweise während des wenigstens einen Schaltzyklus der zweite Schalter in Abhängigkeit einer zweiten Einschaltzeitdauer ausgeschaltet; auf Basis der Rückführgröße die Entladezeitdauer bestimmt, zu der der durch die Energiespeichereinheit fließende Strom einen zweiten Schwellenwert, insbesondere unteren Schwellenwert, erreicht; und die zweite Einschaltzeitdauer für den nachfolgenden Schaltzyklus in Abhängigkeit der bestimmten Entladezeitdauer angepasst.

Um das erfindungsgemäße Verfahren zu erreichen können die vorstehenden optionalen Merkmale beliebig kombiniert werden.

Vorzugsweise entspricht das erfindungsgemäße Verfahren einer beliebigen Kombination der einzelnen Verfahrensschritte, die die vorstehend beschriebene erfindungsgemäße Steuereinheit ausführen kann.

### 4. Beschreibung bevorzugter Ausführungsformen

Nachfolgend wird eine detaillierte Beschreibung der Figuren gegeben. Darin zeigt:
**Figur 1** ein Beispiel für Steuersignale zur Steuerung wenigstens eines aktiv getakteten Konverters mit wenigstens zwei Schaltern gemäß einem Schwellenwert-Steuerverfahren gemäß dem Stand der Technik.
**Figur 2** einen schematischen Schaltplan einer bevorzugten Ausführungsform eines erfindungsgemäßen Betriebsgerätes mit einer erfindungsgemäßen Steuereinheit.
**Figur 3** einen schematischen Schaltplan einer weiteren bevorzugten Ausführungsform eines erfindungsgemäßen Betriebsgerätes mit einer erfindungsgemäßen Steuereinheit.
**Figur 4** die Steuersignale einer bevorzugten Ausführungsform eines erfindungsgemäßen Verfahren zur Steuerung wenigstens eines aktiv getakteten Konverters mit wenigstens zwei Schaltern.

In den Figuren sind sich entsprechende Elemente mit den gleichen Bezugszeichen gekennzeichnet.

**Figur 1** zeigt ein Beispiel für Steuersignale zur Steuerung wenigstens eines aktiv getakteten Konverters mit wenigstens zwei Schaltern mittels eines Schwellenwert-Steuerverfahrens gemäß dem Stand der Technik. Die Nachteile dieser Schwellenwert-Steuerung gemäß dem Stand der Technik wurden bereits Vorstehend beschrieben.

**Figur 2** zeigt einen schematischen Schaltplan einer bevorzugten Ausführungsform eines erfindungsgemäßen Betriebsgerätes mit einer erfindungsgemäßen Steuereinheit.

Das in Figur 2 gezeigte Betriebsgerät 1 umfasst einen aktiv getakteten Konverter 3a und eine erfindungsgemäße Steuereinheit 2, wobei die erfindungsgemäße Steuereinheit 2 dazu eingerichtet ist, den aktiv getakteten Konverter 3a, insbesondere die zwei Schalter S1 und S2, mittels der vorstehend beschriebenen erfindungsgemäßen Kombination aus einer Zeitdauer-Steuerung und Schwellenwert-Steuerung zu steuern, um das Leuchtmittel 4 elektrisch zu versorgen. Die Steuereinheit 2 ist also dazu eingerichtet, das vorstehend beschriebene erfindungsgemäße Verfahren zur Steuerung des aktiv getakteten Konverters zur elektrischen Versorgung des Leuchtmittels 4 durchzuführen.

Vorzugsweise ist der aktiv getaktete Konverter 3a ein Buck-Konverter, insbesondere ein synchroner Buck-Konverter, mit zwei Schaltern S1 und S2 sowie einer Energiespeichereinheit L1. Die Energiespeichereinheit L1 wird durch Taktung der zwei Schalter S1 und S2, insbesondere des Schalters S1, geladen und entladen, um die am Eingang E, E' des Konverters zuführbare Eingangsspannung in eine am Ausgang A, A' bereitgestellte Ausgangsspannung gemäß der Taktung zu wandeln. Durch die Steuerung der Taktung der zwei Schalter S1 und S2, insbesondere des Schalters S1, kann also das Laden und Entladen der Energiespeichereinheit L1 des Konverters gesteuert werden, wodurch der durch die Energiespeichereinheit L1 fließende gemittelte Strom und folglich die dem am Ausgang A, A' des Konverters anschließbaren Leuchtmittel 4 zugeführte elektrische Energie gesteuert werden kann. Durch die Steuerung der dem Leuchtmittel 4 zugeführten elektrischen Energie kann die von dem Leuchtmittel 4 abgestrahlte bzw. emittierte Lichtleistung gesteuert werden. Es kann also durch die Steuerung der Taktung der zwei Schalter S1 und S2, insbesondere des Schalter S1, ein Dimmen des Leuchtmittels 4 gesteuert werden.

Die beiden Schalter S1 und S2 sind vorzugsweise Transistoren, insbesondere Feldeffekt-Transistoren, wie z.B. MOSFET, oder Bipolar-Transistoren.

Die Energiespeichereinheit L1 des Konverters ist vorzugsweise eine Induktivität oder Drossel.

Der erste Schalter S1 des Konverters 3a ist an einer Seite (eingangsseitigen Seite) mit dem Eingang E des Konverters verbunden und an der anderen Seite (ausgangsseitigen Seite) mit der Energiespeichereinheit L1 in Reihe geschaltet. Der zweite Schalter S2 ist an einer Seite mit dem Knoten K1 zwischen dem ersten Schalter S1 und der Energiespeichereinheit L1 und an der anderen Seite mit Masse elektrisch verbunden. Parallel zu dem Schalter S2 ist eine Diode D1 angeordnet, deren Anode mit Masse und Kathode mit dem Knoten K1 elektrisch verbunden ist.

Optional kann die in Figur 2 gezeigte Diode D1, welche parallel zu dem zweiten Schalter S2 angeordnet ist, auch weggelassen werden. Insbesondere kann die Funktion der in Figur 2 gezeigten Diode D1 durch eine Bodydiode eines MOSFET ersetzt werden, wenn der zweite Schalter S2 ein MOSFET mit einer Bodydiode ist.

Gemäß der Figur 2 ist parallel zum Eingang E, E' vorzugsweise eine erste weitere Energiespeichereinheit C1 in Form einer Kapazität angeordnet, die an einer Seite mit der eingangsseitigen Seite des ersten Schalters S1 und an der anderen Seite mit Masse elektrisch verbunden ist. Die erste weitere Energiespeichereinheit C1 dient vorzugsweise zum Speichern der am Eingang E, E' des Konverters 3a zugeführten elektrischen Energie und/oder zur Glättung der am Eingang E, E' zuführbaren Spannung zur Bereitstellung von elektrischer Energie.

Ferner ist vorzugsweise ausgangsseitig der Energiespeichereinheit L1 parallel zum Ausgang A, A' des Konverters 3a eine zweite weitere Energiespeichereinheit C2 in Form einer Kapazität angeordnet, die mit der ausgangsseitigen Seite der Energiespeichereinheit L1 und Masse elektrisch verbunden ist. Die zweite Energiespeichereinheit C2 dient vorzugsweise zum Speichern der durch die Taktung der Schalter S1 und S2 bereitgestellten elektrischen Energie und/oder zur Glättung der durch die Taktung der Schalter S1 und S2 bereitgestellten Ausgangsspannung des Konverters 3a.

Am Eingang E, E' des Konverters 3a kann eine elektrische Energiequelle angeschlossen werden, wie zum Beispiel eine Wechselspannungs- oder Gleichspannungsquelle. Optional können am Eingang E, E' ein Gleichrichter und/oder eine Filterschaltung zur Gleichrichtung und/oder Filterung der Eingangsspannung vorgesehen sein, die Teil des Konverters 3a und/oder des Betriebsgerätes 1 sein können. Vorzugsweise sind ein solcher Gleichrichter und/oder Filterschaltung aber externe Bauteile, sodass dem Betriebsgerät 1, insbesondere dem Eingang E, E' des Konverters 3, eine gleichgerichtete Wechselspannung oder eine Gleichspannung zugeführt wird.

Das Betriebsgerät kann vorzugsweise auch mehr als nur einen Konverter 3a umfassen, wobei dann der Konverter 3a vorzugsweise einer Konverterstufe in einer Konverter-Strecke des Betriebsgerätes 1 zur elektrischen Versorgung des Leuchtmittels 4 entspricht.

Am Ausgang A, A' des Konverters 3a des Betriebsgerätes 1 ist ein Leuchtmittel 4 anschließbar, das ausgehend von der am Ausgang A, A' bereitgestellten Spannung, Strom und/oder elektrischen Energie betrieben werden kann.

Wie bereits vorstehend ausgeführt, können auch mehrere Leuchtmittel am Ausgang A, A' des Konverters 3a angeschlossen werden.

Das Betriebsgerät 1 und das wenigstens eine Leuchtmittel 4 bilden vorzugsweise eine erfindungsgemäße Leuchte, wobei das Betriebsgerät 1 zum Betreiben des Leuchtmittels 4 eingerichtet ist. Die erfindungsgemäße Leuchte kann auch wenigstens zwei Betriebsgeräte 1 sowie wenigstens zwei Leuchtmittel 4 umfassen. D.h., die erfindungsgemäße Leuchte kann ein oder mehrere Betriebsgeräte 1 zum Betreiben von einem oder mehreren Leuchtmittel aufweisen.

Das Leuchtmittel 4 ist vorzugsweise eine Leuchtdiode, wie z.B. eine organische oder anorganische Leuchtdiode oder eine Leuchtdiode mit Primäranregung und/oder Sekundäranregung.

Die Steuereinheit 2 ist dazu eingerichtet, die zwei Schalter S1 und S2 der Konverterschaltung 3a durch Anlegen von entsprechenden Steuersignalen an den Schaltern S1 und S2 zu steuern (vgl. in der Figur 2 die von der Steuereinheit 2 weggehenden Pfeile sowie die Pfeile an den Schaltern S1 und S2).

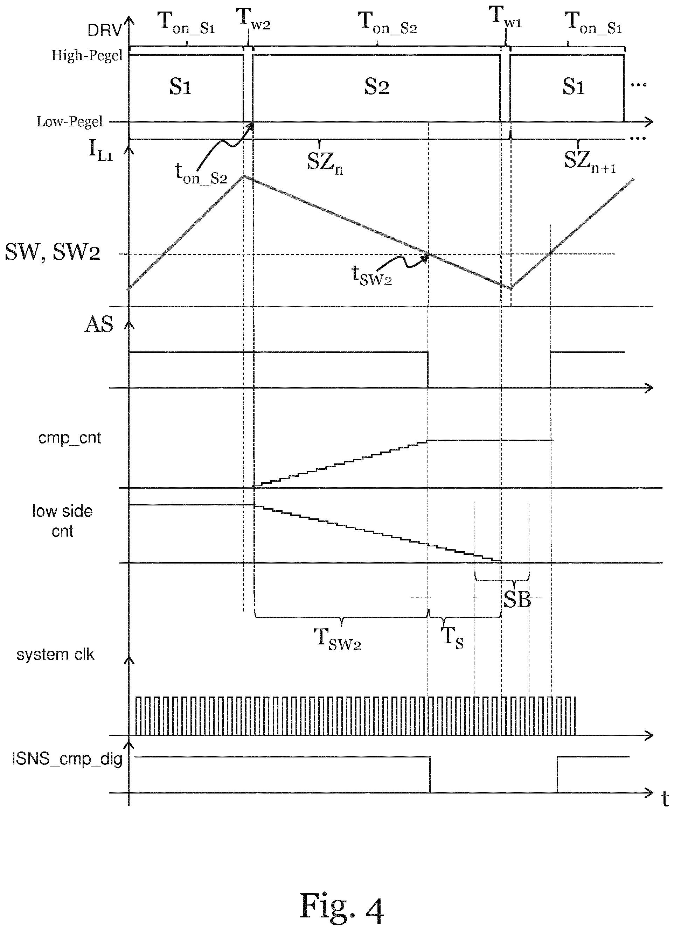

Ein Beispiel für solche Steuersignale zur erfindungsgemäßen Steuerung der Schalter S1 und S2 ist in Figur 4 gezeigt.

Zur Steuerung der Schalter S1 und S2 wird der Steuereinheit 2 der durch die Energiespeichereinheit L1 fließende Strom als Rückführgröße RG zugeführt. Insbesondere wird ein den durch die Energiespeichereinheit L1 fließenden Strom wiedergebender Parameter, wie z.B. eine Spannung, der Steuereinheit 2 als Rückführgröße RG zugeführt.

Gemäß der in Figur 2 gezeigten bevorzugten Ausführungsform des erfindungsgemäßen Betriebsgerätes 1 bzw. der Konverterschaltung 3a wird der durch die Energiespeichereinheit L1 fließende Strom durch einen Messwiderstand Rs erfasst und dann als Rückführgröße RG der Steuereinheit 2 zugeführt (vgl. gestrichelten Pfeil beim Widerstand Rs in der Figur 2). Der Messwiderstand Rs ist hierzu an einer Seite mit der massenseitigen Seite des zweiten Schalter S2 und der massenseitigen Seite bzw. der Anode der Diode D1 und an der anderen Seite mit dem Ausgang A' und der zweiten weiteren Energiespeichereinheit C2 elektrisch verbunden.

Gemäß der Erfindung kann der Strom durch die Energiespeichereinheit L1 auch auf eine andere bekannte Weise als durch einen Messwiderstand Rs erfasst werden.

Gemäß der Figur 2 wird die den durch die Energiespeichereinheit L1, insbesondere Induktivität, des Konverters 3a fließenden Strom wiedergebende Rückführgröße RG einem Komparator KMP zugeführt, der die Rückführgröße mit einem vorbestimmten Schwellenwert SW, SW1, SW2 vergleicht und als Vergleichsergebnis bzw. Ausgangssignal AS ausgibt, ob der durch die Induktivität L1 des Konverters 3a fließende Strom den Schwellenwert SW, SW1, SW2 erreicht hat oder nicht.

Die Steuereinheit 2 ist dann vorzugsweise dazu eingerichtet, das Ausgangssignal AS des Komparators KMP mit ihrer Taktung abzutasten, um in Abhängigkeit der Rückführgröße RG, insbesondere des Vergleichsergebnisses AS des Komparators KMP, die Schalter S1 und S2 zu steuern.

Vorzugsweise ist der Komparator dazu eingerichtet, während des Ladens der Energiespeichereinheit L1 den Strom durch die Energiespeichereinheit L1 mit einem ersten Schwellenwert SW1, insbesondere oberen Schwellenwert, zu vergleichen und/oder während des Entladens der Energiespeichereinheit L1 den Strom durch die Energiespeichereinheit L1 mit einem zweiten Schwellenwert, insbesondere unteren Schwellenwert, zu vergleichen.

Alternativ kann das Betriebsgerät 1 auch mehr als einen Komparator, insbesondere zwei Komparatoren aufweisen, wobei dann ein erster Komparator dazu eingerichtet ist, den Strom durch die Energiespeichereinheit L1 mit dem ersten Schwellenwert SW1 zu vergleichen und/oder ein zweiter Komparator dazu eingerichtet ist, den Strom durch die Energiespeichereinheit L1 mit dem zweiten Schwellenwert SW2 zu vergleichen.

Gemäß der Figur 2 ist der wenigstens eine Komparator KMP extern zu der Steuereinheit 2 angeordnet. Vorzugsweise kann der wenigstens eine Komparator KMP aber auch Teil der Steuereinheit 2 sein.

In der Figur 2 sind sowohl die Steuerung der Schalter S1 und S2 mit Steuersignalen (vgl. Pfeile ausgehend von der Steuereinheit und Pfeile bei den Schaltern S1 und S2 in Figur 2) sowie die Erfassung und Rückführung des Stroms durch die Energiespeichereinheit L1 (vgl. gestrichelten Pfeil beim Widerstand Rs und beim Komparator KMP in Figur 2) lediglich schematisch dargestellt. Erfindungsgemäße kann die Bereitstellung von Steuersignalen ausgehend von der Steuereinheit 2 zu den Schaltern S1 und S2 des Konverters 3a sowie die Erfassung und Rückführung des Stroms durch die Energiespeichereinheit L1 als Rückführgröße RG zu der Steuereinheit 2 auf jede bekannte Art erfolgen. Die vorliegende Erfindung beschäftigt sich nämlich insbesondere mit dem Steuerverfahren, das die Steuereinheit 2 zur Steuerung der Schalter S1 und S2 des Konverters, durchführt.

Vorzugsweise ist die Steuereinheit dazu eingerichtet, die Taktung der Schalter S1 und S2 des Konverters 3a derart zu steuern, dass in einem Schaltzyklus zuerst der erste Schalter S1 eingeschaltet wird und der zweite Schalter S2 ausgeschaltet ist und anschließend der erste Schalter S1 ausgeschaltet und der zweite Schalter S2 eingeschaltet wird. Hierbei erfolgt vorzugsweise das Einschalten eines Schalters nicht sofort nach dem Ausschalten des anderen Schalters, sondern erst nach einer Wartezeit. Dies soll sicherstellen, dass zu keinem Zeitpunkt die Schalter S1 und S2 gleichzeitig eingeschaltet sind.

Während der erste Schalter S1 eingeschaltet, d.h. leitend, und der zweite Schalter S2 ausgeschaltet, d.h. nicht leitend, ist, wird die Energiespeichereinheit L1 ausgehend von der an den Eingang E, E' des Konverters 3a anschließbaren elektrischen Energiequelle geladen, wobei ein Strom ausgehend von dem Eingang E des Konverters durch den leitenden ersten Schalter S1 und die Energiespeichereinheit L1 fließt. Während der erste Schalter S1 und der zweite Schalter S2 für die Wartezeit gleichzeitig ausgeschaltet sind, nachdem der erste Schalter S1 wieder ausgeschaltet wurde, fließt ein Strom durch die Diode D1 und die Energiespeichereinheit L1, wodurch die Energiespeichereinheit L1 wieder entladen wird. Während der erste Schalter S1 ausgeschaltet und der zweite Schalter S2 eingeschaltet ist, fließt der Strom durch die Energiespeichereinheit L1 und den eingeschalteten zweiten Schalter S2, wodurch die Energiespeichereinheit L1 weiter entladen wird. Sobald der Strom bei ausgeschalteten ersten Schalter S1 über den zweiten Schalter S2 und nicht mehr über die Diode D1 fließt, wird die Verlustleistung reduziert, da der Schalter S2 einen geringeren Durchlasswiderstand im Vergleich zu dem Durchlasswiderstand der Diode D1 aufweist.

Vorzugsweise ist die Steuereinheit 2 dazu eingerichtet, das Ausschalten des ersten Schalters S1 des Konverters 3a mittels der erfindungsgemäßen Kombination aus einer Zeitdauer-Steuerung und einer Schwellenwert-Steuerung zu steuern.

Hierzu ist die Steuereinheit 2 vorzugsweise dazu eingerichtet, in einem Initialisierungs-Schaltzyklus (ersten Schaltzyklus) den ersten Schalter S1 einzuschalten und solange im eingeschalteten Zustand zu halten, bis der Strom durch die Energiespeichereinheit L1, welcher im eingeschalteten Zustand des ersten Schalters S1 einem ansteigenden Ladestrom entspricht, einen ersten Schwellenwert SW1, insbesondere oberen Schwellen, erreicht. Hierbei ist der erste Schwellenwert SW1 vorzugsweise derart gewählt, dass ein gewünschter mittlerer Strom und somit eine gewünschte elektrische Energie am Ausgang A, A' des Konverters 3a erreicht wird. Die Steuereinheit 2 schaltet den ersten Schalter S1 wieder aus, sobald der durch die Energiespeichereinheit L1 fließende Strom den ersten Schwellenwert SW1 erreicht.

Die Steuereinheit 2 ist vorzugsweise ferner dazu eingerichtet, während dem Initialisierungs-Schaltzyklus die Ladezeitdauer zu bestimmen, zu der der Strom durch die Energiespeichereinheit L1 den ersten Schwellenwert SW1 erreicht. D.h., die Steuereinheit 2 ist vorzugsweise dazu eingerichtet, die Zeitdauer ausgehend von dem Einschalten des ersten Schalters S1 bis zu dem Zeitpunkt zu bestimmen, zu dem der Strom durch die Energiespeichereinheit L1 den ersten Schwellenwert SW1 erreicht.

Die Steuereinheit 2 ist dann vorzugsweise dazu eingerichtet, für den nachfolgenden Schaltzyklus oder die nachfolgenden Schaltzyklen die Einschaltzeitdauer des ersten Schalters S1 als Summer von der in dem Initialisierungs-Schaltzyklus bestimmten Ladezeitdauer und einer Sicherheitszeitdauer einzustellen.

In dem nachfolgende Schaltzyklus bzw. den nachfolgenden Schaltzyklen nach dem Initialisierungs-Schaltzyklus ist die Steuereinheit 2 vorzugsweise dazu eingerichtet, den ersten Schalter S1 einzuschalten und solange im eingeschalteten Zustand zu halten bis die im vorherigen Schaltzyklus eingestellte Einschaltzeitdauer abgelaufen ist. D.h. in dem nachfolgenden Schaltzyklus bzw. den nachfolgenden Schaltzyklen ist die Steuereinheit 2 dann vorzugsweise dazu eingerichtet, den ersten Schalter S1 in Abhängigkeit der Einschaltzeitdauer auszuschalten. Die Steuereinheit 2 ist des Weiteren vorzugsweise dazu eingerichtet, während dem nachfolgenden Schaltzyklus bzw. den nachfolgenden Schaltzyklen die Ladezeitdauer zu bestimmen, zu dem der Strom durch die Energiespeichereinheit L1 den ersten Schwellenwert SW1 erreicht, und abhängig von der bestimmten Ladezeitdauer die Einschaltzeitdauer für den nachfolgenden Schaltzyklus anzupassen.

Insbesondere ist die Steuereinheit dazu eingerichtet, während dem nachfolgenden Schaltzyklus bzw. den nachfolgenden Schaltzyklen zu bestimmen, ob eine Summe von der bestimmten Ladezeitdauer und der Sicherheitszeitdauer innerhalb oder außerhalb eines Sicherheitsbereichs der Einschaltzeitdauer des ersten Schalter S1 liegt. Für den Fall, dass die Summe von der bestimmten Ladezeitdauer und der Sicherheitszeitdauer innerhalb des Sicherheitsbereichs liegt, wird die Einschaltzeitdauer für den nachfolgenden Schaltzyklus unverändert gelassen. Für den Fall, dass die Summe von der bestimmten Ladezeitdauer und der Sicherheitszeitdauer außerhalb des Sicherheitsbereichs liegt, wird die Einschaltzeitdauer des ersten Schalters S1 für den nachfolgenden Schaltzyklus derart geändert, dass sie als Summe von der bestimmten Ladezeitdauer und der Sicherheitsdauer eingestellt wird.

Vorzugsweise ist die Steuereinheit 2 dazu eingerichtet, während jedes Schaltzyklus nach dem Initialisierungs-Schaltzyklus den ersten Schalter S1 in Abhängigkeit der Einschaltzeitdauer des ersten Schalters S1 auszuschalten. Abhängig von dem vorhergehenden bzw. den vorhergehenden Schaltzyklen entspricht hierbei vorzugsweise die Einschaltzeitdauer des ersten Schalters S1 in dem jeweiligen Schaltzyklus der in dem Initialisierungs-Schaltzyklus eingestellten Einschaltzeitdauer oder der in dem vorhergehenden Schaltzyklus unverändert gelassenen oder geänderten Einschaltzeitdauer. Ferner ist die Steuereinheit 2 vorzugsweise dazu eingerichtet, während jedes Schaltzyklus nach dem Initialisierungs-Schaltzyklus die Ladezeitdauer zu bestimmen, zu der der Strom durch die Energiespeichereinheit L1 den ersten Schwellenwert erreicht, und in Abhängigkeit dieser bestimmten Ladezeitdauer die Einschaltzeitdauer des ersten Schalters S1 für den nachfolgenden Schaltzyklus anzupassen, d.h. unverändert zu lassen oder zu ändern.

Alternativ oder zusätzlich ist die Steuereinheit 2 dazu eingerichtet, das Ausschalten des zweiten Schalters S2 des Konverters 3a mittels der erfindungsgemäßen Kombination aus einer Zeitdauer-Steuerung und einer Schwellenwert-Steuerung zu steuern.

Hierzu ist die Steuereinheit 2 vorzugsweise dazu eingerichtet, in dem Initialisierungs-Schaltzyklus (ersten Schaltzyklus) den Schalter S2 einzuschalten und solange im eingeschalteten Zustand zu halten, bis der Strom durch die Energiespeichereinheit L1, welcher im ausgeschalteten Zustand des ersten Schalters S1 und eingeschalteten Zustand des zweiten Schalters S2 einem sich verringernden Entladestrom entspricht, einen zweiten Schwellenwert SW2, insbesondere unteren Schwellen, erreicht. Hierbei ist der zweite Schwellenwert SW2 vorzugsweise derart gewählt, dass ein gewünschter mittlerer Strom und somit eine gewünschte elektrische Energie am Ausgang A, A' des Konverters 3a erreicht wird. Die Steuereinheit 2 schaltet den zweiten Schalter S2 wieder aus, sobald der durch die Energiespeichereinheit L1 fließende Strom den zweiten Schwellenwert SW2 erreicht.

Die Steuereinheit 2 ist vorzugsweise ferner dazu eingerichtet, während dem Initialisierungs-Schaltzyklus die Entladezeitdauer zu bestimmen, zu der der Strom durch die Energiespeichereinheit L1 den zweiten Schwellenwert SW2 erreicht. D.h., die Steuereinheit 2 ist vorzugsweise dazu eingerichtet, die Zeitdauer ausgehend von dem Einschalten des zweiten Schalters S2 bis zu dem Zeitpunkt zu bestimmen, zu dem der Strom durch die Energiespeichereinheit L1 den zweiten Schwellenwert SW2 erreicht.

Die Steuereinheit 2 ist dann vorzugsweise dazu eingerichtet, für den nachfolgenden Schaltzyklus oder die nachfolgenden Schaltzyklen die Einschaltzeitdauer des zweiten Schalters S2 als Summe von der in dem Initialisierungs-Schaltzyklus bestimmten Entladezeitdauer und der Sicherheitszeitdauer einzustellen.

In dem nachfolgende Schaltzyklus bzw. den nachfolgenden Schaltzyklen nach dem Initialisierungs-Schaltzyklus ist die Steuereinheit 2 vorzugsweise dazu eingerichtet, den zweiten Schalter S2 einzuschalten und solange im eingeschalteten Zustand zu halten, bis die im vorherigen Schaltzyklus eingestellte Einschaltzeitdauer abgelaufen ist. D.h. in dem nachfolgenden Schaltzyklus bzw. den nachfolgenden Schaltzyklen ist die Steuereinheit 2 dann vorzugsweise dazu eingerichtet, den zweiten Schalter S2 in Abhängigkeit der Einschaltzeitdauer des zweiten Schalters S2 auszuschalten. Die Steuereinheit 2 ist des Weiteren vorzugsweise dazu eingerichtet, während dem nachfolgenden Schaltzyklus bzw. den nachfolgenden Schaltzyklen die Entladezeitdauer zu bestimmen, zu dem der Strom durch die Energiespeichereinheit L1 den zweiten Schwellenwert SW2 erreicht und abhängig von der bestimmten Entladezeitdauer die Einschaltzeitdauer des zweiten Schalters S2 für den nachfolgenden Schaltzyklus anzupassen.

Insbesondere ist die Steuereinheit 2 dazu eingerichtet, während dem nachfolgenden Schaltzyklus bzw. den nachfolgenden Schaltzyklen zu bestimmen, ob die Summe von der bestimmten Entladezeitdauer und der Sicherheitszeitdauer innerhalb oder außerhalb eines Sicherheitsbereichs der Einschaltzeitdauer des zweiten Schalters S2 liegt. Für den Fall, dass die Summe von der bestimmten Entladezeitdauer und der Sicherheitszeitdauer innerhalb des Sicherheitsbereichs liegt, wird die Einschaltzeitdauer für den nachfolgenden Schaltzyklus unverändert gelassen. Für den Fall, dass die Summe von der bestimmten Entladezeitdauer und der Sicherheitszeitdauer außerhalb des Sicherheitsbereichs liegt, wird die Einschaltzeitdauer für den nachfolgenden Schaltzyklus derart geändert, dass sie als Summe von der bestimmten Entladezeitdauer und der Sicherheitsdauer eingestellt wird.

Vorzugsweise ist die Steuereinheit 2 dazu eingerichtet, während jedes Schaltzyklus nach dem Initialisierungs-Schaltzyklus den zweiten Schalter S2 in Abhängigkeit der Einschaltzeitdauer des zweiten Schalters S2 auszuschalten. Abhängig von dem vorhergehenden bzw. den vorhergehenden Schaltzyklen entspricht hierbei vorzugsweise die Einschaltzeitdauer des zweiten Schalters S2 in dem jeweiligen Schaltzyklus der in dem Initialisierungs-Schaltzyklus eingestellten Einschaltzeitdauer oder der in dem vorhergehenden Schaltzyklus unverändert gelassenen oder geänderten Einschaltzeitdauer. Ferner ist die Steuereinheit 2 vorzugsweise dazu eingerichtet, während jedes Schaltzyklus nach dem Initialisierungs-Schaltzyklus die Entladezeitdauer zu bestimmen, zu der der Strom durch die Energiespeichereinheit L1 den zweiten Schwellenwert SW2 erreicht, und in Abhängigkeit dieser bestimmten Entladezeitdauer die Einschaltzeitdauer des zweiten Schalters S2 für den nachfolgenden Schaltzyklus anzupassen, d.h. unverändert zu lassen oder zu ändern.

In der vorliegenden Erfindung wird die Einschaltzeitdauer des ersten Schalters S1 auch als erste Einschaltzeitdauer und die Einschaltzeitdauer des zweiten Schalters S2 auch als zweite Einschaltzeitdauer bezeichnet.

Im Lichte der obigen Ausführungen ist die Steuereinheit also dazu eingerichtet, nur den ersten Schalter S1 oder nur den zweiten Schalter S2 oder den ersten Schalter S1 und den zweiten Schalter S2 mittels der vorstehend beschriebenen erfindungsgemäßen Kombination aus einer Zeitdauer-Steuerung und einer Schwellenwert-Steuerung zu steuern. Insbesondere wird der Schalter S1 und/oder der Schalter S2 gemäß dieser erfindungsgemäßen Kombination aus einer Zeitdauer-Steuerung und einer Schwellenwert-Steuerung während eines Initialisierungs-Schaltzyklus mittels einer Schwellenwert-Steuerung gesteuert, um dann in den nachfolgenden Schaltzyklen mittels einer Zeitdauer-Steuerung in Abhängigkeit der jeweiligen Einschaltzeitdauer gesteuert zu werden. Hierbei wird vorzugsweise während dem Initialisierung-Schaltzyklus die Einschaltzeitdauer des ersten Schalters S1 und/oder zweiten Schalter S2 für den ersten Schaltzyklus nach dem Initialisierungs-Schaltzyklus eingestellt. Während jedes Schaltzyklus nach dem Initialisierungsschaltzyklus wird dann die Einschaltzeitdauer des ersten Schalters S1 und/oder zweiten Schalters S2 für den nachfolgenden Schaltzyklus in Abhängigkeit der Zeitdauer angepasst, die der Strom in dem jeweiligen Schaltzyklus benötigt, um den ersten Schwellenwert SW1 bzw. den zweiten Schwellenwert SW2 zu erreichen.

Für den Fall, dass nur einer der beiden Schalter S1 und S2 des Konverters gemäß der vorstehend beschriebenen erfindungsgemäßen Kombination aus Zeitdauer-Steuerung und Schwellenwert-Steuerung gesteuert wird, ist die Steuereinheit 2 vorzugsweise dazu eingerichtet, den anderen Schalter gemäß einer Zeitdauer-Steuerung derart zu steuern, dass ein gewünschter mittlerer Strom und somit eine gewünschte elektrische Energie am Ausgang A, A' des Konverters 3a erreicht wird.

**Figur 3** zeigt einen schematischen Schaltplan einer weiteren bevorzugten Ausführungsform eines erfindungsgemäßen Betriebsgerätes mit einer erfindungsgemäßen Steuereinheit.

Das Betriebsgerät 1 der Figur 3 unterscheidet sich von dem Betriebsgerät der Figur 2 lediglich in der Implementierung des Konverters. Folglich ist das vorstehend Gesagte, insbesondere hinsichtlich der Erfassung und Rückführung des Stroms durch die Energiespeichereinheit L1 des Konverters sowie der Steuerung der Schalter S1 und S2 durch die Steuereinheit, ebenfalls für das in Figur 3 gezeigte Betriebsgerät 1 zutreffend. Im nachfolgenden wird daher lediglich die unterschiedliche Ausgestaltung des Konverters beschrieben.

Der aktiv getaktete Konverter 3b des in Figur 3 gezeigten Betriebsgerätes 1 ist vorzugsweise ein Flyback-Konverter, insbesondere ein synchroner Flyback-Konverter, mit zwei Schaltern S1 und S2 sowie einer Energiespeichereinheit L1.

Die beiden Schalter S1 und S2 sind vorzugsweise Transistoren, insbesondere Feldeffekt-Transistoren, wie z.B. MOSFET, oder Bipolar-Transistoren.

Die Energiespeichereinheit L1 des Konverters 3b umfasst vorzugsweise zumindest die Primärwicklung PWL eines Transformators TF, welche eine Induktivität oder Drossel darstellt.

Der in Figur 3 gezeigte aktiv getaktete Konverter 3b umfasst einen Transformator TF mit einer Primärwicklung PWL und einer Sekundärwicklung SWL, der den Eingang E, E' und die Primärseite PS des Konverters 3b von dem Ausgang A, A' und die Sekundärseite SS des Konverters 3b galvanisch trennt.

Der Transformator TF ist vorzugsweise ein Speichertransformator mit einem Luftspalt.

Auf der Primärseite PS des Konverters 3b ist der erste Schalter S1 des Konverters 3b mit der Energiespeichereinheit L1 in Reihe geschaltet, wobei die Energiespeichereinheit L1 zumindest die Primärwicklung PWL des Transformators TF umfasst oder dieser entspricht. Auf der Sekundärseite SS des Konverters 3b ist der zweite Schalter S2 an einer Seite mit der Sekundärwicklung SWL des Transformators TF und an der anderen Seite mit dem Ausgang A des Konverters 3b elektrisch verbunden. Parallel zu dem Schalter S2 ist eine Diode D1 angeordnet, deren Anode mit der Sekundärwicklung SWL des Transformators TF und Kathode mit dem Ausgang A des Konverters 3b elektrisch verbunden ist.

Optional kann die in Figur 3 gezeigte Diode D1, welche parallel zu dem zweiten Schalter S2 angeordnet ist, auch weggelassen werden. Insbesondere kann die Funktion der in Figur 3 gezeigten Diode D1 durch die Bodydiode eines MOSFET ersetzt werden, wenn der zweite Schalter ein MOSFET mit einer Bodydiode ist. Gemäß der Figur 3 ist parallel zum Eingang E, E' vorzugsweise eine erste weitere Energiespeichereinheit C1 in Form einer Kapazität angeordnet, die an einer Seite mit der Primärwicklung PWL des Transformators TF und an der anderen Seite mit Masse sowie dem ersten Schalter S1 elektrisch verbunden ist. Die erste weitere Energiespeichereinheit C1 dient vorzugsweise zum Speichern der am Eingang E, E' des Konverters 3b zugeführten elektrischen Energie und/oder zur Glättung der am Eingang E, E' zuführbaren Spannung zur Bereitstellung von elektrischer Energie.

Ferner ist vorzugsweise ausgangsseitig des zweiten Schalters S2 parallel zum Ausgang A, A' des Konverters 3b eine zweite weitere Energiespeichereinheit C2 in Form einer Kapazität angeordnet, die mit der ausgangsseitigen Seite des zweiten Schalters und Masse elektrisch verbunden ist. Die zweite Energiespeichereinheit C2 dient vorzugsweise zum Speichern der durch die Taktung der Schalter S1 und S2 bereitgestellten elektrischen Energie und/oder zur Glättung der durch die Taktung der Schalter S1 und S2 bereitgestellten Ausgangsspannung des Konverters 3b.

Am Eingang E, E' des Konverters 3b kann eine elektrische Energiequelle angeschlossen werden, wie zum Beispiel eine Wechselspannungs- oder Gleichspannungsquelle. Optional können am Eingang E, E' ein Gleichrichter und/oder eine Filterschaltung zur Gleichrichtung und/oder Filterung der Eingangsspannung vorgesehen sein, die Teil des Konverters 3b und/oder des Betriebsgerätes 1 sein können. Vorzugsweise sind ein solcher Gleichrichter und/oder Filterschaltung aber externe Bauteile, sodass dem Betriebsgerät 1, insbesondere dem Eingang E, E' des Konverters 3b, eine gleichgerichtete Wechselspannung oder eine Gleichspannung zugeführt wird.

Das Betriebsgerät 1 kann vorzugsweise auch mehr als nur einen Konverter 3b umfassen, wobei dann der Konverter 3b vorzugsweise einer Konverterstufe in einer Konverter-Strecke des Betriebsgerätes 1 zur elektrischen Versorgung des Leuchtmittels 4 entspricht.

Am Ausgang A, A' des Konverters 3b des Betriebsgerätes 1 ist ein Leuchtmittel 4 anschließbar, das ausgehend von der am Ausgang A, A' bereitgestellten Spannung, Strom und/oder elektrischen Energie betrieben werden kann.

Wie bereits vorstehend ausgeführt, können auch mehrere Leuchtmittel am Ausgang A, A' des Konverters 3b angeschlossen werden.

Das Betriebsgerät 1 und das wenigstens eine Leuchtmittel 4 bilden vorzugsweise eine erfindungsgemäße Leuchte, wobei das Betriebsgerät 1 zum Betreiben des Leuchtmittels 4 eingerichtet ist. Die erfindungsgemäße Leuchte kann auch wenigstens zwei Betriebsgeräte 1 sowie wenigstens zwei Leuchtmittel 4 umfassen. D.h., die erfindungsgemäße Leuchte kann ein oder mehrere Betriebsgeräte 1 zum Betreiben von einem oder mehreren Leuchtmittel aufweisen.

Das Leuchtmittel 4 ist vorzugsweise eine Leuchtdiode, wie z.B. eine organische oder anorganische Leuchtdiode oder eine Leuchtdiode mit Primäranregung und/oder Sekundäranregung.

Die Steuereinheit 2 kann sowohl auf der Primärseite PS wie auch auf der Sekundärseite SS des Konverters 3b angeordnet sein.

In der Figur 3 sind sowohl die Steuerung der Schalter S1 und S2 mit Steuersignalen (vgl. Pfeile ausgehend von der Steuereinheit und bei den Schaltern S1 und S2 in Figur 3) sowie die Erfassung und Rückführung des Stroms durch die Energiespeichereinheit L1 (vgl. gestrichelten Pfeil beim Widerstand Rs und Komparator KMP in Figur 3) lediglich schematisch dargestellt. Erfindungsgemäß kann die Bereitstellung von Steuersignalen ausgehend von der Steuereinheit 2 zu den Schaltern S1 und S2 des Konverters 3b sowie die Erfassung und Rückführung des Stroms durch die Energiespeichereinheit L1 als Rückführgröße RG zu der Steuereinheit 2 auf jede bekannte Art erfolgen. Die vorliegende Erfindung beschäftigt sich nämlich insbesondere mit dem Steuerverfahren, das die Steuereinheit 2 zur Steuerung der Schalter S1 und S2 des Konverters, durchführt.

**Figur 4** zeigt die Steuersignale einer bevorzugten Ausführungsform eines erfindungsgemäßen Verfahren zur Steuerung wenigstens eines aktiv getakteten Konverters mit wenigstens zwei Schaltern.

Gemäß der Figur 4 beginnt der durch die Energiespeichereinheit L1 fließende Strom I_{L1} zu sinken, wenn der Schalter S1 ausgeschaltet wird (das Steuersignal DRV für den Schalter S1 wechselt von einem "hohen" Zustand (High-Pegel) zu einem "niedrigen" Zustand (Low-Pegel)). Vorzugsweise kann der Strom I_{L1} nach dem Abschalten des Schalters S1 noch etwas ansteigen, da in den parasitären Komponenten des aktiv getakteten Konverters noch Energie gespeichert sein kann, die den Strom etwas weiter treibt.

Gemäß dem in Figur 4 gezeigten bevorzugten Ausführungsform des erfindungsgemäßen Verfahrens zur Steuerung der wenigstens zwei Schalter S1 und S2 eines aktiv getakteten Konverters, welcher zum Beispiel dem in Figur 2 gezeigten Buck-Konverter 3a oder dem in Figur 3 gezeigten Flyback-Konverter 3b entsprechen kann, wird lediglich der zweite Schalter S2, der während der Entladung der Energiespeichereinheit L1 des Konverters einen Strompfad für den Strom I_{L1} durch die Energiespeichereinheit L1 bereitstellt, gemäß der vorstehend beschriebenen erfindungsgemäßen Kombination aus Zeitdauer-Steuerung und Schwellenwert-Steuerung gesteuert. Gemäß der Figur 4 wird der erste Schalter S1 zur Steuerung des Ladens und Entladens der Energiespeichereinheit L1 gemäß einer Zeitdauer-Steuerung gesteuert.

Wie bereits vorstehend ausgeführt, können aber auch beide Schalter S1 und S2 des Konverters mittels der vorstehend beschriebenen erfindungsgemäßen Kombination aus Zeitdauer-Steuerung und Schwellenwert-Steuerung gesteuert werden. Alternativ kann auch nur der erste Schalter S1 des Konverters mittels der vorstehend beschriebenen erfindungsgemäßen Kombination aus Zeitdauer-Steuerung und Schwellenwert-Steuerung gesteuert werden, wobei dann der zweite Schalter 2 vorzugsweise mittels einer Zeitdauer-Steuerung gesteuert wird.

Gemäß der Figur 4 wird in einem Schaltzyklus SZₙ zuerst der erste Schalter S1 eingeschaltet (das Steuersignal DRV für den ersten Schalter S1 wechselt von einem "niedrigen" Zustand (Low-Pegel) zu einem "hohen" Zustand (High-Pegel)), wobei der zweite Schalter S2 ausgeschaltet bleibt. Der erste Schalter S1 bleibt dann für die Einschaltzeitdauer T_{on_S1} im eingeschalteten Zustand. Im eingeschalteten Zustand des ersten Schalters S1 steigt der Strom I_{L1} durch die Energiespeichereinheit L1 des Konverters solange an, bis der erste Schalter S1 wieder ausgeschaltet wird.

Anschließend, nach Ablauf der Einschaltzeitdauer T_{on_S1}, wird der erste Schalter S1 wieder ausgeschaltet (das Steuersignal DRV für den ersten Schalter S1 wechselt von dem "hohen" Zustand (High-Pegel) zu dem "niedrigen" Zustand (Low-Pegel)). Bevor der zweite Schalter S2 eingeschaltet wird, sind die Schalter S1 und S2 vorzugsweise beide für eine Wartezeit T_{w2} im ausgeschalteten Zustand, wodurch sichergestellt wird, dass die beiden Schalter S1 und S2 nie gleichzeitig leitend sind. Aufgrund des Ausschaltens des ersten Schalter S1 beginnt der Strom I_{L1} zu sinken bzw. sich zu verringern.

Nach Ablauf der Wartezeit T_{w2} wird der zweite Schalter S2 eingeschaltet (das Steuersignal DRV für den zweiten Schalter S2 wechselt von einem "niedrigen" Zustand (Low-Pegel) zu einem "hohen" Zustand (High-Pegel)), wobei der erste Schalter S1 ausgeschaltet bleibt. Der zweite Schalter bleibt dann für die Einschaltzeitdauer T_{on_S2} im eingeschalteten Zustand. Im eingeschalteten Zustand des zweiten Schalters S2 sinkt bzw. verringert sich der Strom I_{L1} durch die Energiespeichereinheit L1 des Konverters.

Falls der Einschaltzyklus SZₙ der erste Schaltzyklus nach dem Initialisierungs-Schaltzyklus ist, entspricht die Einschaltzeitdauer T_{on_S2} des zweiten Schalters S2 für den Schaltzyklus SZₙ der Summe von der während dem Initialisierungs-Schaltzyklus bestimmten Entladezeitdauer T_{SW2} des Stroms I_{L1} durch die Energiespeichereinheit und der Sicherheitszeitdauer Ts. Diese bestimmte Entladezeitdauer ist beispielhaft in dem Graphen "cmp_cnt" gezeigt.

Falls der Einschaltzyklus SZₙ irgendein Schalzyklus nach dem Initialisierung-Schaltzyklus ist, entspricht die Einschaltzeitdauer T_{on_S2} des Schaltzyklus SZₙ entweder der Einschaltzeitdauer T_{on_S2} des vorhergehenden Schaltzyklus oder der Summe von der während dem vorhergehenden Schaltzyklus bestimmten Entladezeitdauer T_{SW2} und der Sicherheitszeitdauer Ts. Dies hängt vorzugsweise davon ab, ob im vorhergehenden Schaltzyklus die Summe von der bestimmten Entladezeitdauer T_{SW2} und der Sicherheitszeitdauer T_{S} innerhalb oder außerhalb des Sicherheitsbereichs SB der Einschaltzeitdauer T_{on_S2} des zweiten Schalters S2 für den vorhergehenden Schaltzyklus gelegen hat.

Für den Fall, dass während dem vorhergehenden Schaltzyklus die Summe von der Entladezeitdauer T_{SW2} und der Sicherheitszeitdauer T_{S} innerhalb des Sicherheitsbereichs SB der Einschaltzeitdauer T_{on_S2} des zweiten Schalters S2 für den vorhergehenden Schaltzyklus gelegen hat, wurde die Einschaltzeitdauer T_{on_S2} vorzugsweise nicht geändert und somit entspricht die Einschaltzeitdauer T_{on_S2} des zweiten Schalters S2 für den Schaltzyklus SZₙ der Einschaltzeitdauer T_{on_S2} des zweiten Schalters S2 für den vorhergehenden Schaltzyklus. Für den Fall, dass während dem vorhergehenden Schaltzyklus die Summe von der Entladezeitdauer T_{SW2} und der Sicherheitszeitdauer T_{S} außerhalb des Sicherheitsbereichs SB der Einschaltzeitdauer T_{on_S2} des zweiten Schalters S2 für den vorhergehenden Schaltzyklus gelegen hat, wurde die Einschaltzeitdauer T_{on_S2} vorzugsweise derart geändert, dass die Einschaltzeitdauer T_{on_S2} des zweiten Schalters S2 für den Schaltzyklus SZₙ als Summe von der Entladezeitdauer T_{SW2} des vorhergehenden Schaltzyklus und der Sicherheitszeitdauer T_{S} eingestellt wurde.

Während dem Schaltzyklus SZₙ wird vorzugsweise ferner die Entladezeitdauer T_{SW2} bestimmt, zu der der Strom I_{L1} durch den Energiespeichereinheit L1 des Konverters den zweiten Schwellenwert SW2 erreicht. Die Entladezeitdauer T_{SW2} entspricht also der Zeitdauer von dem Zeitpunkt t_{on_S2}, zu dem der zweite Schalter S2 eingeschaltet wird, bis zu dem Zeitpunkt t_{SW2}, bei dem der Strom I_{L1} den zweiten Schwellenwert erreicht.

Ferner wird während dem Schaltzyklus SZₙ bestimmt, ob die Summe von der Entladezeitdauer T_{SW2} und der Sicherheitszeitdauer T_{S} innerhalb des Sicherheitsbereichs SB der Einschaltzeitdauer T_{on_S2} des zweiten Schalters S2 für den Schaltzyklus SZₙ liegt oder nicht. Gemäß der Figur 4 liegt diese Summer innerhalb des Sicherheitsbereichs SB (vgl. den Graphen "low_side_cnt" der Figur 4), sodass die Einschaltzeitdauer T_{on_S2} des zweiten Schalters S2 nicht verändert wird und somit die Einschaltzeitdauer T_{on_S2} des zweiten Schalters S2 für den nachfolgenden Schaltzyklus SZₙ₊₁ der Einschaltzeitdauer T_{on_S2} des zweiten Schalters S2 während des Schaltzyklus SZₙ entspricht.

Während dem Schaltzyklus SZₙ wird der zweite Schalter S2 vorzugsweise wieder ausgeschaltet (das Steuersignal DRV für den zweiten Schalter S2 wechselt von dem "hohen" Zustand (High-Pegel) zu dem "niedrigen" Zustand (Low-Pegel), sobald die Einschaltzeitdauer T_{on_S2} des zweiten Schalters S2 ausgehend von dem Einschaltzeitpunkt t_{on_S2} des zweiten Schalters S2 abgelaufen ist.

Bevor der zweite Schalter S1 im nachfolgenden Schaltzyklus SZₙ₊₁ wieder eingeschaltet wird, sind die Schalter S1 und S2 vorzugsweise beide für eine Wartezeit T_{w1} im ausgeschalteten Zustand, wodurch sichergestellt wird, dass die beiden Schalter S1 und S2 nie gleichzeitig leitend sind.

Die Wartezeit T_{w2} zwischen dem Ausschalten des ersten Schalter S1 und dem Einschalten des zweiten Schalters S2 und die Wartezeit T_{w1} zwischen dem Ausschalten des zweiten Schalters S2 und dem Einschalten des ersten Schalters S1 entsprechen vorzugsweise der gleichen Wartezeit.

Die in Figur 4 gezeigte Steuersignale DRV sind lediglich beispielhaft, sodass vorzugsweise ein Einschalten eines Schalters auch durch einen Wechsel von einem High-Pegel zu einem Low-Pegel und ein Ausschalten eines Schalters auch durch einen Wechsel von einem Low-Pegel zu einem High-Pegel gesteuert werden kann.

## Patentansprüche

1. Steuereinheit (2) zur Steuerung wenigstens eines aktiv getakteten Konverters (3a, 3b) zur elektrischen Versorgung wenigstens eines Leuchtmittels (4), insbesondere einer Leuchtdiode, wobei
- der aktiv getaktete Konverter (3a, 3b) wenigstens zwei Schalter (S1, S2) und eine Energiespeichereinheit (L1), insbesondere eine Induktivität, aufweist;
- die Steuereinheit (2) dazu eingerichtet ist, durch Ein- und Ausschalten der wenigstens zwei Schalter (S1, S2) ein Laden und Entladen der Energiespeichereinheit (L1) zu steuern, und
- die Steuereinheit (2) dazu eingerichtet ist, den durch die Energiespeichereinheit (L1) fließenden Strom als Rückführgröße (RG) zu erhalten;
- die Steuereinheit (2) dazu eingerichtet ist, während wenigstens eines Schaltzyklus (SZₙ)
- ein Umschalten wenigstens eines Schalters der wenigstens zwei Schalter (S1, S2) in Abhängigkeit einer Einschaltzeitdauer (T_{on_S1}, T_{on_S2}) zu steuern,
- auf Basis der Rückführgröße die Zeitdauer zu bestimmen, nach der der durch die Energiespeichereinheit (L1) fließende Strom einen Schwellenwert (SW1, SW2) erreicht, und
- die Einschaltzeitdauer (T_{on_S1}, T_{on_S2}) für den nachfolgenden Schaltzyklus (SZₙ₊₁) in Abhängigkeit der bestimmten Zeitdauer (T_{SW1}, T_{SW2}) anzupassen, **dadurch gekennzeichnet, dass** die Steuereinheit (2) dazu eingerichtet ist
- zu bestimmen, ob eine Summe von der bestimmten Zeitdauer (T_{SW1}, T_{SW2}) und einer Sicherheitszeitdauer (T_{S}) innerhalb eines Sicherheitsbereichs (SB) der Einschaltzeitdauer (T_{on_S1}, T_{on_S2}) liegt, und die Einschaltzeitdauer (T_{on_S1}, T_{on_S2}) für den nachfolgenden Schaltzyklus (SZₙ₊₁) in Abhängigkeit der Bestimmung hinsichtlich des Sicherheitsbereichs (SB) anzupassen,
wobei ein Schaltzyklus ein Zeitraum ist, während dem die Energiespeichereinheit (L1) des Konverters (3a, 3b) einmal geladen und wieder entladen wird.

2. Steuereinheit (2) gemäß Anspruch 1, wobei
- die Steuereinheit (2) dazu eingerichtet ist, während des wenigstens einen Schaltzyklus (SZₙ)
- die Einschaltzeitdauer (T_{on_S1}, T_{on_S2}) für den nachfolgenden Schaltzyklus (SZₙ₊₁) unverändert zu lassen, wenn die Summe von der bestimmten Zeitdauer (T_{SW1}, T_{SW2}) und der Sicherheitszeitdauer (T_{S}) innerhalb des Sicherheitsbereichs (SB) liegt, und
- die Einschaltzeitdauer (T_{on_S1}, T_{on_S2}) für den nachfolgenden Schaltzyklus (SZₙ₊₁) zu ändern, wenn die Summe von der bestimmten Zeitdauer (T_{SW1}, T_{SW2}) und der Sicherheitszeitdauer (T_{S}) außerhalb des Sicherheitsbereichs (SB) liegt.

3. Steuereinheit (2) gemäß Anspruch 1 oder 2, wobei
- die Steuereinheit (2) dazu eingerichtet ist, die Einschaltzeitdauer (T_{on_S1}, T_{on_S2}) derart zu ändern, dass im nachfolgenden Schaltzyklus (SZₙ₊₁) die Einschaltzeitdauer (T_{on_S1}, T_{on_S2}) der Summe von der bestimmten Zeitdauer (T_{SW1}, T_{SW2}) und der Sicherheitszeitdauer (T_{S}) entspricht.

4. Steuereinheit (2) gemäß einem der Ansprüche 1 bis 3, wobei die Steuereinheit (2) dazu eingerichtet ist, während wenigstens eines ersten Schaltzyklus
- auf Basis der Rückführgröße (RG) die Zeitdauer (T_{SW1}, T_{SW2}) zu bestimmen, nach der der durch die Energiespeichereinheit fließende Strom den Schwellenwert (SW1, SW2) erreicht,
- den wenigstens einen Schalter in Abhängigkeit der bestimmten Zeitdauer (T_{SW1}, T_{SW2}) umzuschalten, und
- die Einschaltzeitdauer (T_{on_S1}, T_{on_S2}) für den nachfolgenden Schaltzyklus (SZₙ₊₁) als Summe von der bestimmten Zeitdauer (T_{SW1}, T_{SW2}) und der Sicherheitszeitdauer (T_{S}) einzustellen.

5. Steuereinheit (2) gemäß einem der Ansprüche 1 bis 4, aufweisend eine Speichereinheit (SPE) zum Speichern der Einschaltzeitdauer (T_{on_S1}, T_{on_S2}), des Schwellenwerts, des Sicherheitsbereichs (SB), der Sicherheitszeitdauer (T_{S}) und/oder der Rückführgröße (RG).

6. Steuereinheit (2) gemäß einem der vorhergehenden Ansprüche, wobei die wenigstens zwei Schalter (S1, S2) und die Energiespeichereinheit (S1) des aktiv getakteten Konverters (3a, 3b) derart verschaltet sind, dass
- ein erster Schalter (S1) der wenigstens zwei Schalter (S1, S2) dazu eingerichtet ist, im eingeschalteten Zustand einen Strompfad für den durch die Energiespeichereinheit (L1) fließenden Strom zum Laden der Energiespeichereinheit (L1) bereitzustellen, und
- der zweite Schalter (S2) der wenigstens zwei Schalter (S1, S2) dazu eingerichtet ist, im eingeschalteten Zustand einen Strompfad für den durch die Energiespeichereinheit (L1) fließenden Strom beim Entladen der Energiespeichereinheit (L1) bereitzustellen,
- wobei vorzugsweise parallel zu dem zweiten Schalter (S2) eine Diode (D1) geschaltet ist.

7. Steuereinheit (2) gemäß Anspruch 6, wobei die Steuereinheit (2) dazu eingerichtet ist, während des wenigstens einen Schaltzyklus (SZₙ)
- den ersten Schalter (S1) einzuschalten und den zweiten Schalter (S2) auszuschalten, um die Energiespeichereinheit (L1) zu laden, und
- den ersten Schalter (S1) auszuschalten und den zweiten Schalter (S2) einzuschalten, um die Energiespeichereinheit (L1) zu entladen.

8. Steuereinheit (2) gemäß Anspruch 6 oder 7, wobei die Steuereinheit (2) dazu eingerichtet ist, während des wenigstens einen Schaltzyklus (SZₙ) die wenigstens zwei Schalter (S1, S2) derart zu steuern, dass
- der erste Schalter (S1) erst nach einer ersten Wartezeit (T_{w1}) nach dem Ausschalten des zweiten Schalters (S2) eingeschaltet wird, und
- der zweite Schalter (S2) erst nach einer zweiten Wartezeit (T_{w2}) nach dem Ausschalten des ersten Schalters (S1) eingeschaltet wird,
- wobei vorzugsweise die erste Wartezeit (T_{w1}) und die zweite Wartezeit (T_{w2}) der gleichen Zeitdauer entsprechen.

9. Steuereinheit (2) gemäß einem der Ansprüche 6 bis 8, wobei
- die Steuereinheit (2) dazu eingerichtet ist, während des wenigstens einen Schaltzyklus (SZₙ)
- das Ausschalten des ersten Schalters (S1) in Abhängigkeit einer ersten Einschaltzeitdauer (T_{on_S1}) zu steuern,
- auf Basis der Rückführgröße die Ladezeitdauer (T_{SW1}) zu bestimmen, nach der der durch die Energiespeichereinheit (L1) fließende Strom einen ersten Schwellenwert (SW1), insbesondere oberen Schwellenwert, erreicht, und
- die erste Einschaltzeitdauer (T_{on_S1}) für den nachfolgenden Schaltzyklus (SZₙ₊₁) in Abhängigkeit der bestimmten Ladezeitdauer (T_{SW1}) anzupassen; und/oder
- das Ausschalten des zweiten Schalters (S2) in Abhängigkeit einer zweiten Einschaltzeitdauer (T_{on_S2}) zu steuern,
- auf Basis der Rückführgröße die Entladezeitdauer (T_{SW2}) zu bestimmen, nach der der durch die Energiespeichereinheit (L1) fließende Strom einen zweiten Schwellenwert (SW2), insbesondere unteren Schwellenwert, erreicht, und
- die zweite Einschaltzeitdauer (T_{on_S2}) für den nachfolgenden Schaltzyklus (SZₙ₊₁) in Abhängigkeit der bestimmten Entladezeitdauer (T_{SW2}) anzupassen.

10. Steuereinheit (2) gemäß Anspruch 9, wobei
- die Steuereinheit (2) dazu eingerichtet ist, während des wenigstens einen Schaltzyklus (SZₙ)
- den ersten Schalter (S1) nach Ablauf der ersten Einschaltzeitdauer (T_{on_S1}) ausgehend von dem Einschaltzeitpunkt (to_{n_S1}) des ersten Schalters (S1) auszuschalten,
auf Basis der Rückführgröße die Ladezeitdauer (T_{SW1}) ausgehend von dem Einschaltzeitpunkt (t_{on_S1}) des ersten Schalters (S1) bis zu dem Zeitpunkt (t_{SW1}) zu bestimmen, zu dem der durch die Energiespeichereinheit (L1) fließende Strom den ersten Schwellenwert (SW1) erreicht, und
die erste Einschaltzeitdauer (T_{on_S1}) für den nachfolgenden Schaltzyklus (SZₙ₊₁) in Abhängigkeit der bestimmten Ladezeitdauer (T_{SW1}) anzupassen; und/oder
- den zweiten Schalter (S2) nach Ablauf der zweiten Einschaltzeitdauer (T_{on_S2}) ausgehend von dem Einschaltzeitpunkt (t_{on_S2}) des zweiten Schalters (S2) auszuschalten,
auf Basis der Rückführgröße die Entladezeitdauer (T_{SW2}) ausgehend von dem Einschaltzeitpunkt (t_{on_S2}) des zweiten Schalters (S2) bis zu dem Zeitpunkt (t_{SW2}) zu bestimmen, zu dem der durch die Energiespeichereinheit (L1) fließende Strom den zweiten Schwellenwert (SW2) erreicht, und
die zweite Einschaltzeitdauer (T_{on_S2}) für den nachfolgenden Schaltzyklus (SZₙ₊₁) in Abhängigkeit der bestimmten Entladezeitdauer (T_{SW2}) anzupassen

11. Steuereinheit (2) gemäß Anspruch 9 oder 10, wobei
- die Steuereinheit (2) dazu eingerichtet ist, während des wenigstens einen Schaltzyklus (SZₙ)
- zu bestimmen, ob die Summe von der bestimmten Ladezeitdauer (T_{SW1}) und einer Sicherheitszeitdauer (T_{S}) innerhalb eines ersten Sicherheitsbereichs (SB1) der ersten Einschaltzeitdauer (T_{on_S1}) liegt, und die erste Einschaltzeitdauer (T_{on_S1}) für den nachfolgenden Schaltzyklus (SZₙ₊₁) in Abhängigkeit der Bestimmung hinsichtlich des ersten Sicherheitsbereichs (SB1) anzupassen; und/oder
- zu bestimmen, ob die Summe von der bestimmten Entladezeitdauer (T_{SW2}) und der Sicherheitszeitdauer (T_{S}) innerhalb eines zweiten Sicherheitsbereichs (SB2) der zweiten Einschaltzeitdauer (T_{on_S2}) liegt, und die zweite Einschaltzeitdauer (T_{on_S2}) für den nachfolgenden Schaltzyklus (SZₙ₊₁) in Abhängigkeit der Bestimmung hinsichtlich des zweiten Sicherheitsbereichs (SB2) anzupassen;
- wobei vorzugsweise der erste Sicherheitsbereich (SB1) und/oder der zweite Sicherheitsbereich (SB2) dem gleichen Sicherheitsbereich, insbesondere dem Sicherheitsbereich (SB) der Einschaltzeitdauer entspricht.

12. Steuereinheit (2) gemäß Anspruch 11, wobei
- die Steuereinheit (2) dazu eingerichtet ist, während des wenigstens einen Schaltzyklus (SZₙ)
- die erste Einschaltzeitdauer (T_{on_S1}) für den nachfolgenden Schaltzyklus (SZₙ₊₁) unverändert zu lassen, wenn die Summe von der bestimmten Ladezeitdauer (T_{SW1}) und der Sicherheitszeitdauer (T_{S}) innerhalb des ersten Sicherheitsbereichs (SB1) liegt, und
- die erste Einschaltzeitdauer (T_{on_S1}) für den nachfolgenden Schaltzyklus (SZₙ₊₁) zu ändern, wenn die Summe von der bestimmten Ladezeitdauer (T_{SW1}) und der Sicherheitszeitdauer (T_{S}) außerhalb des ersten Sicherheitsbereichs (SB1) liegt; und/oder
- die zweite Einschaltzeitdauer (T_{on_S2}) für den nachfolgenden Schaltzyklus (SZₙ₊₁) unverändert zu lassen, wenn die Summe von der bestimmten Entladezeitdauer (T_{SW2}) und der Sicherheitszeitdauer (T_{S}) innerhalb des zweiten Sicherheitsbereichs (SB2) liegt, und
- die zweite Einschaltzeitdauer (T_{on_S2}) für den nachfolgenden Schaltzyklus (SZₙ₊₁) zu ändern, wenn die Summe von der bestimmten Entladezeitdauer (T_{SW2}) und der Sicherheitszeitdauer (T_{S}) außerhalb des zweiten Sicherheitsbereichs (SB2) liegt

13. Steuereinheit (2) gemäß Anspruch 12, wobei
- die Steuereinheit (2) dazu eingerichtet ist, die erste Einschaltzeitdauer (T_{on_S1}) derart zu ändern, dass im nachfolgenden Schaltzyklus (SZₙ₊₁) die erste Einschaltzeitdauer (T_{on_S1}) der Summe von der bestimmten Ladezeitdauer (T_{SW1}) und der Sicherheitszeitdauer (T_{S}) entspricht; und/oder
- die Steuereinheit (2) dazu eingerichtet ist, die zweite Einschaltzeitdauer (T_{on_S2}) derart zu ändern, dass im nachfolgenden Schaltzyklus (SZₙ₊₁) die zweite Einschaltzeitdauer (T_{on_S2}) der Summe von der bestimmten Entladezeitdauer (T_{SW2}) und der Sicherheitszeitdauer (T_{S}) entspricht.

14. Steuereinheit (2) gemäß einem der Ansprüche 11 bis 13, wobei die Steuereinheit (2) dazu eingerichtet ist, während wenigstens eines ersten Schaltzyklus
- auf Basis der Rückführgröße die Ladezeitdauer (T_{SW1}) zu bestimmen, nach der der durch die Energiespeichereinheit (L1) fließende Strom den ersten Schwellenwert (SW1) erreicht,
- den ersten Schalter (S1) in Abhängigkeit der bestimmten Ladezeitdauer (T_{SW1}) auszuschalten, und
- die erste Einschaltzeitdauer (T_{on_S1}) als Summe von der bestimmten Ladezeitdauer (T_{SW1}) und der Sicherheitszeitdauer (T_{S}) einzustellen; und/oder
- auf Basis der Rückführgröße die Entladezeitdauer (T_{SW2}) zu bestimmen, nach der der durch die Energiespeichereinheit (L1) fließende Strom den zweiten Schwellenwert (SW2) erreicht,
- den zweiten Schalter (S2) in Abhängigkeit der bestimmten Entladezeitdauer (T_{SW2}) auszuschalten, und
- die zweite Einschaltzeitdauer (T_{on_S2}) als Summe von der bestimmten Entladezeitdauer (T_{SW2}) und der Sicherheitszeitdauer (T_{S}) einzustellen.

## Claims

1. Control unit (2) for controlling at least one actively clocked converter (3a, 3b) for electrically supplying at least one illuminant (4), in particular a light-emitting diode, wherein
- the actively clocked converter (3a, 3b) comprises at least two switches (S1, S2) and an energy storage unit (L1), in particular an inductor;
- the control unit (2) is configured to control the charging and discharging of the energy storage unit (L1) by switching the at least two switches (S1, S2) on and off, and
- the control unit (2) is configured to receive as a feedback variable (RG) the current flowing through the energy storage unit (L1);
- the control unit (2) is configured, during at least one switching cycle (SZₙ),
- to control a switching of at least one switch of the at least two switches (S1, S2) as a function of a switch-on time span (T_{on_S1}, To_{n_S2}),
- to determine, on the basis of the feedback variable, the time span after which the current flowing through the energy storage unit (L1) reaches a threshold value (SW1, SW2), and
- to adapt the switch-on time span (T_{on_S1}, T_{on_S2}) for the following switching cycle (SZₙ₊₁) as a function of the determined time span (T_{SW1}, T_{SW2}),
**characterized in that** the control unit (2) is configured
- to determine whether a sum of the determined time span (T_{SW1}, T_{SW2}) and a safety time span (T_{S}) falls within a safety range (SB) of the switch-on time span (T_{on_S1}, T_{on_S2}) and to adapt the switch-on time span (T_{on_S1}, T_{on_S2}) for the following switching cycle (SZₙ₊₁) as a function of the determination with respect to the safety range (SB),
wherein a switching cycle is a period during which the energy storage unit (L1) of the converter (3a, 3b) is charged once and discharged again.

2. Control unit (2) according to claim 1, wherein
- the control unit (2) is configured, during the at least one switching cycle (SZₙ),
- to leave the switch-on time span (T_{on_S1}, T_{on_S2}) for the following switching cycle (SZₙ₊₁) unchanged when the sum of the determined time span (T_{SW1}, T_{SW2}) and the safety time span (Ts) falls within the safety range (SB), and
- to change the switch-on time span (T_{on_S1}, T_{on_S2}) for the following switching cycle (SZₙ₊₁) when the sum of the determined time span (T_{SW1}, T_{SW2}) and the safety time span (Ts) falls outside the safety range (SB).

3. Control unit (2) according to claim 1 or 2, wherein
- the control unit (2) is configured to change the switch-on time span (T_{on_S1}, T_{on_S2}) such that, in the following switching cycle (SZₙ₊₁), the switch-on time span (T_{on_S1}, T_{on_S2}) corresponds to the sum of the determined time span (T_{SW1}, T_{SW2}) and the safety time span (Ts).

4. Control unit (2) according to any one of claims 1 to 3, wherein the control unit (2) is configured, during at least a first switching cycle,
- to determine on the basis of the feedback variable (RG) the time span (T_{SW1}, T_{SW2}) after which the current flowing through the energy storage unit reaches the threshold value (SW1, SW2),
- to switch the at least one switch as a function of the determined time span (T_{SW1}, T_{SW2}), and
- to adjust the switch-on time span (T_{on_S1}, T_{on_S2}) for the following switching cycle (SZₙ₊₁) to the sum of the determined time span (T_{SW1}, T_{SW2}) and the safety time span (Ts).

5. Control unit (2) according to any one of claims 1 to 4, comprising a storage unit (SPE) for storing the switch-on time span (T_{on_S1}, T_{on_S2}), the threshold value, the safety range (SB), the safety time span (T_{S}) and/or the feedback variable (RG).

6. Control unit (2) according to any one of the preceding claims, wherein the at least two switches (S1, S2) and the energy storage unit (S1) of the actively clocked converter (3a, 3b) are connected in such a way that
- a first switch (S1) of the at least two switches (S1, S2) is configured, in the switched-on state, to provide a current path for the current flowing through the energy storage unit (L1) for charging the energy storage unit (L1), and
- the second switch (S2) of the at least two switches (S1, S2) is configured, in the switched-on state, to provide a current path for the current flowing through the energy storage unit (L1) during discharging of the energy storage unit (L1),
- wherein a diode (D1) is preferably connected in parallel with the second switch (S2).

7. Control unit (2) according to claim 6, wherein the control unit (2) is configured, during the at least one switching cycle (SZₙ),
- to switch on the first switch (S1) and switch off the second switch (S2) in order to charge the energy storage unit (L1), and
- to switch off the first switch (S1) and switch on the second switch (S2) in order to discharge the energy storage unit (L1).

8. Control unit (2) according to claim 6 or 7, wherein the control unit (2) is configured to control the at least two switches (S1, S2) during the at least one switching cycle (SZₙ) in such a way that
- the first switch (S1) is only switched on after a first waiting time (T_{w1}) after the second switch (S2) has been switched off, and
- the second switch (S2) is only switched on after a second waiting time (T_{w2}) after the first switch (S1) has been switched off,
- wherein the first waiting time (T_{w1}) and the second waiting time (T_{w2}) preferably correspond to the same time span.

9. Control unit (2) according to any one of claims 6 to 8, wherein
- the control unit (2) is configured, during the at least one switching cycle (SZₙ),
- to control the switching-off of the first switch (S1) as a function of a first switch-on time span (T_{on_S1}),
- to determine, on the basis of the feedback variable, the charging time span (T_{SW1}) after which the current flowing through the energy storage unit (L1) reaches a first threshold value (SW1), in particular an upper threshold value, and
- to adapt the first switch-on time span (T_{on_S1}) for the following switching cycle (SZₙ₊₁) as a function of the determined charging time span (Tswi); and/or
- to control the switching-off of the second switch (S2) as a function of a second switch-on time span (T_{on_S2}),
- to determine, on the basis of the feedback variable, the discharging time span (T_{SW2}) after which the current flowing through the energy storage unit (L1) reaches a second threshold value (SW2), in particular a lower threshold value, and
- to adapt the second switch-on time span (T_{on_S2}) for the following switching cycle (SZₙ₊₁) as a function of the determined discharging time span (T_{SW2}).

10. Control unit (2) according to claim 9, wherein
- the control unit (2) is configured, during the at least one switching cycle (SZₙ),
- to switch off the first switch (S1) after the first switch-on time span (T_{on_S1}) has elapsed since the switch-on time point (t_{on_S1}) of the first switch (S1),
to determine, on the basis of the feedback variable, the charging time span (T_{SW1}) starting from the switch-on time point (t_{on_S1}) of the first switch (S1) until the time point (t_{SW1}) at which the current flowing through the energy storage unit (L1) reaches the first threshold value (SW1), and
to adapt the first switch-on time span (T_{on_S1}) for the following switching cycle (SZₙ₊₁) as a function of the determined charging time span (Tswi); and/or
- to switch off the second switch (S2) after the second switch-on time span (T_{on_S2}) has elapsed since the switch-on time point (t_{on_S2}) of the second switch (S2),
to determine, on the basis of the feedback variable, the discharging time span (T_{SW2}) starting from the switch-on time point (t_{on_S2}) of the second switch (S2) until the time point (t_{SW2}) at which the current flowing through the energy storage unit (L1) reaches the second threshold value (SW2), and
to adapt the second switch-on time span (T_{on_S2}) for the following switching cycle (SZₙ₊₁) as a function of the determined discharging time span (T_{SW2}).

11. Control unit (2) according to claim 9 or 10, wherein
- the control unit (2) is configured, during the at least one switching cycle (SZₙ),
- to determine whether the sum of the determined charging time span (T_{SW1}) and a safety time span (T_{S}) falls within a first safety range (SB1) of the first switch-on time span (T_{on_S1}) and to adjust the first switch-on time span (T_{on_S1}) for the following switching cycle (SZₙ₊₁) as a function of the determination with respect to the first safety range (SB1); and/or
- to determine whether the sum of the determined discharging time span (T_{SW2}) and the safety time span (T_{S}) falls within a second safety range (SB2) of the second switch-on time span (T_{on_S2}) and to adapt the second switch-on time span (T_{on_S2}) for the following switching cycle (SZₙ₊₁) as a function of the determination with respect to the second safety range (SB2);
- wherein the first safety range (SB1) and/or the second safety range (SB2) preferably correspond to the same safety range, in particular to the safety range (SB) of the switch-on time span.

12. Control unit (2) according to claim 11, wherein
- the control unit (2) is configured, during the at least one switching cycle (SZₙ),
- to leave the first switch-on time span (T_{on_S1}) for the following switching cycle (SZₙ₊₁) unchanged when the sum of the determined charging time span (T_{SW1}) and the safety time span (T_{S}) falls within the first safety range (SB1), and
- to change the first switch-on time span (T_{on_S1}) for the following switching cycle (SZₙ₊₁) when the sum of the determined charging time span (T_{SW1}) and the safety time span (Ts) falls outside the first safety range (SB1); and/or
- to leave the second switch-on time span (T_{on_S2}) for the following switching cycle (SZₙ₊₁) unchanged when the sum of the determined discharging time span (T_{SW2}) and the safety time span (Ts) falls within the second safety range (SB2), and
- to change the second switch-on time span (T_{on_S2}) for the following switching cycle (SZₙ₊₁) when the sum of the determined discharging time span (T_{SW2}) and the safety time span (T_{S}) falls outside the second safety range (SB2).

13. Control unit (2) according to claim 12, wherein
- the control unit (2) is configured to change the first switch-on time span (T_{on_S1}) such that, in the following switching cycle (SZₙ₊₁), the first switch-on time span (T_{on_S1}) corresponds to the sum of the determined charging time span (T_{SW1}) and the safety time span (T_{S}); and/or
- the control unit (2) is configured to change the second switch-on time span (T_{on_S2}) such that, in the following switching cycle (SZₙ₊₁), the second switch-on time span (T_{on_S2}) corresponds to the sum of the determined discharging time span (T_{SW2}) and the safety time span (T_{S}).

14. Control unit (2) according to any one of claims 11 to 13, wherein the control unit (2) is configured, during at least a first switching cycle,
- to determine, on the basis of the feedback variable, the charging time span (T_{SW1}) after which the current flowing through the energy storage unit (L1) reaches the first threshold value (SW1),
- to switch off the first switch (S1) as a function of the determined charging time span (T_{SW1}), and
- to adjust the first switch-on time span (T_{on_S1}) to the sum of the determined charging time span (T_{SW1}) and the safety time span (T_{S}); and/or
- to determine, on the basis of the feedback variable, the discharging time span (T_{SW2}) after which the current flowing through the energy storage unit (L1) reaches the second threshold value (SW2),
- to switch off the second switch (S2) as a function of the determined discharging time span (T_{SW2}), and
- to adjust the second switch-on time span (T_{on_S2}) to the sum of the determined discharging time span (T_{SW2}) and the safety time span (T_{S}).

## Revendications

1. Unité de commande (2) pour commander au moins un convertisseur (3a, 3b) cadencé activement destiné à l'alimentation électrique d'au moins un moyen d'éclairage (4), en particulier une diode électroluminescente, dans laquelle
- le convertisseur (3a, 3b) cadencé activement comprend au moins deux commutateurs (S1, S2) et une unité de stockage d'énergie (L1), en particulier une inductance ;
- l'unité de commande (2) est conçue pour commander, par mise sous tension et hors tension des au moins deux commutateurs (S1, S2), une charge et une décharge de l'unité de stockage d'énergie (L1) et
- l'unité de commande (2) est conçue pour recevoir le courant traversant l'unité de stockage d'énergie (L1) comme grandeur de rétroaction (RG) ;
- l'unité de commande (2) est conçue, pendant au moins un cycle de commutation (SZₙ),
- pour commander une commutation d'au moins un commutateur des au moins deux commutateurs (S1, S2) en fonction d'une durée de mise sous tension (T_{on_S1}, T_{on_S2}),
- pour déterminer, en fonction de la grandeur de rétroaction, une durée après laquelle le courant traversant l'unité de stockage d'énergie (L1) atteint une valeur seuil (SW1, SW2) et
- pour adapter la durée de mise sous tension (T_{on_S1}, T_{on_S2}) pour le cycle de commutation suivant (SZₙ₊₁) en fonction de la durée (T_{SW1}, T_{SW2}) déterminée,
**caractérisée en ce que** l'unité de commande (2) est conçue
- pour déterminer si une somme de la durée (T_{SW1}, T_{SW2}) déterminée et d'une durée de sécurité (T_{S}) se situe dans une plage de sécurité (SB) de la durée de mise sous tension (T_{on_S1}, T_{on_S2}) et pour adapter la durée de mise sous tension (T_{on_S1}, T_{on_S2}) pour le cycle de commutation suivant (SZₙ₊₁) en fonction de la détermination relative à la plage de sécurité (SB),
dans laquelle un cycle de commutation est une durée pendant laquelle l'unité de stockage d'énergie (L1) du convertisseur (3a, 3b) est chargée et déchargée une fois.

2. Unité de commande (2) selon la revendication 1, dans laquelle
- l'unité de commande (2) est conçue, pendant le au moins un cycle de commutation (SZₙ),
- pour laisser la durée de mise sous tension (T_{on_S1}, T_{on_S2}) inchangée pour le cycle de commutation suivant (SZₙ₊₁) lorsque la somme de la durée (T_{SW1}, T_{SW2}) déterminée et de la durée de sécurité (T_{S}) se situe dans la plage de sécurité (SB) et
- pour changer la durée de mise sous tension (T_{on_S1}, T_{on_S2}) pour le cycle de commutation suivant (SZₙ₊₁) lorsque la somme de la durée (T_{SW1}, T_{SW2}) déterminée et de la durée de sécurité (T_{S}) se situe hors de la plage de sécurité (SB).

3. Unité de commande (2) selon la revendication 1 ou 2, dans laquelle
- l'unité de commande (2) est conçue pour changer la durée de mise sous tension (T_{on_S1}, T_{on_S2}) de telle sorte que dans le cycle de commutation suivant (SZₙ₊₁), la durée de mise sous tension (T_{on_S1}, T_{on_S2}) corresponde à la somme de la durée (T_{SW1}, T_{SW2}) déterminée et de la durée de sécurité (T_{S}).

4. Unité de commande (2) selon l'une quelconque des revendications 1 à 3, dans laquelle l'unité de commande (2) est conçue, pendant au moins un premier cycle de commutation,
- pour déterminer, en fonction de la grandeur de rétroaction (RG), la durée (T_{SW1}, T_{SW2}) après laquelle le courant traversant l'unité de stockage d'énergie atteint la valeur seuil (SW1, SW2),
- pour commuter l'au moins un commutateur en fonction de la durée (T_{SW1}, T_{SW2}) déterminée et
- pour régler la durée de mise sous tension (T_{on_S1}, T_{on_S2}) pour le cycle de commutation suivant (SZₙ₊₁) en tant que somme de la durée (T_{SW1}, T_{SW2}) déterminée et de la durée de sécurité (T_{S}).

5. Unité de commande (2) selon l'une quelconque des revendications 1 à 4, comprenant une unité de mémorisation (SPE) pour mémoriser la durée de mise sous tension (T_{on_S1}, T_{on_S2}), la valeur seuil, la plage de sécurité (SB), la durée de sécurité (T_{S}) et/ou la grandeur de rétroaction (RG).

6. Unité de commande (2) selon l'une quelconque des revendications précédentes, dans laquelle les au moins deux commutateurs (S1, S2) et l'unité de stockage d'énergie (S1) du convertisseur (3a, 3b) cadencé activement sont connectés de telle sorte que
- un premier commutateur (S1) des au moins deux commutateurs (S1, S2) soit conçu pour fournir, dans un état sous tension, un chemin de courant pour le courant traversant l'unité de stockage d'énergie (L1) pour charger l'unité de stockage d'énergie (L1) et
- le deuxième commutateur (S2) des au moins deux commutateurs (S1, S2) soit conçu pour fournir, dans l'état sous tension, un chemin de courant pour le courant traversant l'unité de stockage d'énergie (L1) pendant une décharge de l'unité de stockage d'énergie (L1),
- dans laquelle, de préférence en parallèle avec le deuxième commutateur (S2), une diode (D1) est mise sous tension.

7. Unité de commande (2) selon la revendication 6, dans laquelle l'unité de commande (2) est conçue, pendant le au moins un cycle de commutation (SZₙ),
- pour mettre sous tension le premier commutateur (S1) et pour mettre hors tension le deuxième commutateur (S2) pour charger l'unité de stockage d'énergie (L1) et
- mettre hors tension le premier commutateur (S1) et mettre sous tension le deuxième commutateur (S2) pour décharger l'unité de stockage d'énergie (L1).

8. Unité de commande (2) selon la revendication 6 ou 7, dans laquelle l'unité de commande (2) est conçue pour commander les au moins deux commutateurs (S1, S2), pendant le au moins un cycle de commutation (SZₙ), de telle sorte que
- le premier commutateur (S1) ne soit mis sous tension qu'après un premier temps d'attente (T_{w1}) après la mise hors tension du deuxième commutateur (S2) et
- le deuxième commutateur (S2) ne soit mis sous tension qu'après un deuxième temps d'attente (T_{w2}) après la mise hors tension du premier commutateur (S1),
- dans laquelle, de préférence le premier temps d'attente (T_{w1}) et le deuxième temps d'attente (T_{w2}) correspondent à la même durée.

9. Unité de commande (2) l'une quelconque des revendications 6 à 8, dans laquelle
- l'unité de commande (2) est conçue, pendant le au moins un cycle de commutation (SZₙ),
- pour commander la mise hors tension du premier commutateur (S1) en fonction d'une première durée de mise sous tension (T_{on_S1}),
- pour déterminer, en fonction de la grandeur de rétroaction, la durée de charge (T_{SW1}) après laquelle le courant traversant l'unité de stockage d'énergie (L1) atteint une première valeur seuil (SW1), en particulier une valeur seuil supérieure et
- pour adapter la première durée de mise sous tension (T_{on_S1}) pour le cycle de commutation suivant (SZₙ₊₁) en fonction de la durée de charge (T_{SW1}) déterminée ; et/ou
- pour commander la mise hors tension du deuxième commutateur (S2) en fonction d'une deuxième durée de mise sous tension (T_{on_S2}),
- pour déterminer, en fonction de la grandeur de rétroaction, la durée de décharge (T_{SW2}), après laquelle le courant traversant l'unité de stockage d'énergie (L1) atteint une deuxième valeur seuil (SW2), en particulier une valeur seuil inférieure et
- pour adapter la deuxième durée de mise sous tension (T_{on_S2}) pour le cycle de commutation suivant (SZₙ₊₁) en fonction de la durée de décharge (T_{SW2}) déterminée.

10. Unité de commande (2) selon la revendication 9, dans laquelle
- l'unité de commande (2) est conçue, pendant le au moins un cycle de commutation (SZₙ),
- pour mettre hors tension le premier commutateur (S1) après l'écoulement de la première durée de mise sous tension (T_{on_S1}), à partir du moment de mise sous tension (t_{on_S1}) du premier commutateur (S1),
pour déterminer, en fonction de la grandeur de rétroaction, la durée de charge (T_{SW1}), à partir du moment de mise sous tension (t_{on_S1}) du premier commutateur (S1) jusqu'au moment (t_{SW1}) auquel le courant traversant l'unité de stockage d'énergie (L1) atteint la première valeur seuil (SW1) et
pour adapter la première durée de mise sous tension (T_{on_S1}) pour le cycle de commutation suivant (SZₙ₊₁) en fonction de la durée de charge (T_{SW1}) déterminée ; et/ou
- pour mettre hors tension le deuxième commutateur (S2) après l'écoulement de la deuxième durée de mise sous tension (T_{on_S2}), à partir du moment de mise sous tension (t_{on_S2}) du deuxième commutateur (S2),
pour déterminer, en fonction de la grandeur de rétroaction, la durée de décharge (T_{SW2}), à partir du moment de mise sous tension (t_{on_S2}) du deuxième commutateur (S2) jusqu'au moment (t_{SW2}) auquel le courant traversant l'unité de stockage d'énergie (L1) atteint la deuxième valeur seuil (SW2) et
pour adapter la deuxième durée de mise sous tension (T_{on_S2}) pour le cycle de commutation suivant (SZₙ₊₁) en fonction de la durée de décharge (T_{SW2}) déterminée.

11. Unité de commande (2) selon la revendication 9 ou 10, dans laquelle
- l'unité de commande (2) est conçue, pendant le au moins un cycle de commutation (SZₙ),
- pour déterminer si la somme de la durée de charge (T_{SW1}) déterminée et d'une durée de sécurité (T_{S}) se situe dans une première plage de sécurité (SB1) de la première durée de mise sous tension (T_{on_S1}) et pour adapter la première durée de mise sous tension (T_{on_S1}) pour le cycle de commutation suivant (SZₙ₊₁) en fonction de la détermination relative à la première plage de sécurité (SB1) ; et/ou
- pour déterminer si la somme de la durée de décharge (T_{SW2}) déterminée et de la durée de sécurité (T_{S}) se situe dans une deuxième plage de sécurité (SB2) de la deuxième durée de mise sous tension (T_{on_S2}) et pour adapter la deuxième durée de mise sous tension (T_{on_S2}) pour le cycle de commutation suivant (SZₙ₊₁) en fonction de la détermination relative à la deuxième plage de sécurité (SB2) ;
- dans laquelle, de préférence, la première plage de sécurité (SB1) et/ou la deuxième plage de sécurité (SB2) correspondent à la même plage de sécurité, en particulier la plage de sécurité (SB) de la durée de mise sous tension.

12. Unité de commande (2) selon la revendication 11, dans laquelle
- l'unité de commande (2) est conçue, pendant le au moins un cycle de commutation (SZₙ),
- pour laisser la première durée de mise sous tension (T_{on_S1}) inchangée pour le cycle de commutation suivant (SZₙ₊₁) lorsque la somme de la durée de charge (T_{SW1}) déterminée et de la durée de sécurité (T_{S}) se situe dans la première plage de sécurité (SB1) et
- pour changer la première durée de mise sous tension (T_{on_S1}) pour le cycle de commutation suivant (SZₙ₊₁) lorsque la somme de la durée de charge (T_{SW1}) déterminée et de la durée de sécurité (T_{S}) est hors de la première plage de sécurité (SB1) ; et/ou
- pour laisser la deuxième durée de mise sous tension (T_{on_S2}) inchangée pour le cycle de commutation suivant (SZₙ₊₁) lorsque la somme de la durée de décharge (T_{SW2}) déterminée et de la durée de sécurité (T_{S}) se situe dans la deuxième plage de sécurité (SB2) et
- pour changer la deuxième durée de mise sous tension (T_{on_S2}) pour le cycle de commutation suivant (SZₙ₊₁) lorsque la somme de la durée de décharge (T_{SW2}) déterminée et de la durée de sécurité (T_{S}) est hors de la deuxième plage de sécurité (SB2).

13. Unité de commande (2) selon la revendication 12, dans laquelle
- l'unité de commande (2) est conçue pour changer la première durée de mise sous tension (T_{on_S1}) de telle sorte que dans le cycle de commutation suivant (SZₙ₊₁), la première durée de mise sous tension (T_{on_S1}) corresponde à la somme de la durée de charge (T_{SW1}) déterminée et de la durée de sécurité (T_{S}) ; et/ou
- l'unité de commande (2) est conçue pour changer la deuxième durée de mise sous tension (T_{on_S2}) de telle sorte que dans le cycle de commutation suivant (SZₙ₊₁), la deuxième durée de mise sous tension (T_{on_S2}) corresponde à la somme de la durée de décharge (T_{SW2}) déterminée et de la durée de sécurité (T_{S}).

14. Unité de commande (2) selon l'une quelconque des revendications 11 à 13, dans laquelle l'unité de commande (2) est conçue, pendant au moins un premier cycle de commutation,
- pour déterminer, en fonction de la grandeur de rétroaction, la durée de charge (T_{SW1}) après laquelle le courant traversant l'unité de stockage d'énergie (L1) atteint la première valeur seuil (SW1),
- pour mettre hors tension le premier commutateur (S1) en fonction de la durée de charge (T_{SW1}) déterminée et
- pour régler la première durée de mise sous tension (T_{on_S1}) en tant que somme de la durée de charge (T_{SW1}) déterminée et de la durée de sécurité (T_{S}) ; et/ou
- pour déterminer, en fonction de la grandeur de rétroaction, la durée de décharge (T_{SW2}), après laquelle le courant traversant l'unité de stockage d'énergie (L1) atteint la deuxième valeur seuil (SW2),
- pour mettre hors tension le deuxième commutateur (S2) en fonction de la durée de décharge (T_{SW2}) déterminée et
- pour régler la deuxième durée de mise sous tension (T_{on_S2}) en tant que somme de la durée de décharge (T_{SW2}) déterminée et de la durée de sécurité (T_{S}).
